# EUROPEAN PATENT APPLICATION

(11) **EP 4 407 942 A1**
(43) Date of publication of application: **31.07.2024**
(21) Application number: 22885606.8
(22) Date of filing: 08.10.2022
(51) Int. Cl.: H04L 41/0803

(54) **CONFIGURATION MANAGEMENT METHOD, APPARATUS AND SYSTEM, AND STORAGE MEDIUM AND PROGRAM PRODUCT**

(30) Priority: 28.10.2021 CN 202111266501; 06.12.2021 CN 202111481435
(71) Applicant: Huawei Technologies Co., Ltd., Shenzhen, Guangdong 518129 (CN)
(72) Inventor: MA, Qiufang, Shenzhen, Guangdong 518129 (CN); WU, Bo, Shenzhen, Guangdong 518129 (CN); WU, Qin, Shenzhen, Guangdong 518129 (CN)
(74) Representative: MERH-IP Matias Erny Reichl Hoffmann Patentanwälte PartG mbB
(86) International application number: PCT/CN2022/123818
(87) International publication number: WO 2023/071724

(57) **Abstract**

Embodiments of this application disclose a configuration management method, apparatus, and system, a storage medium, and a program product, and belong to the field of communication technologies. In embodiments of this application, backup configuration data generated by a server can be used for configuration rollback. In this way, an administrator can quickly restore the server to an expected state without performing a plurality of configuration operations. In addition, the backup configuration data corresponds to metadata, and the metadata includes baseline indication information and a backup identifier, where the baseline indication information indicates whether the corresponding backup configuration data is baseline configuration data. In this way, when configuration rollback is performed based on the metadata, in one case, it can be specified to roll back to the baseline configuration data. In addition, the metadata is structured data and has a unified view. The metadata can be used to perform flexible unified management on the backup configuration data, thereby reducing management difficulty.

## Description

Embodiments of this application claim priority to Chinese Patent Application No. 202111266501.0, filed on October 28, 2021 and entitled "CONFIGURATION MANAGEMENT METHOD AND APPARATUS", which is incorporated in embodiments of this application by reference in its entirety. Embodiments of this application further claim priority to Chinese Patent Application No. 202111481435.9, filed on December 6, 2021 and entitled "CONFIGURATION MANAGEMENT METHOD, APPARATUS, SYSTEM, STORAGE MEDIUM, AND PROGRAM PRODUCT", which is incorporated in embodiments of this application by reference in its entirety.

### TECHNICAL FIELD

Embodiments of this application relate to the field of communication technologies, and in particular, to a configuration management method, apparatus, and system, a storage medium, and a program product.

### BACKGROUND

Currently, an administrator needs to perform configuration management on a server (for example, a network device) by using a network configuration protocol (network configuration protocol, NETCONF) client (for example, a network management device), to ensure normal running of the server, that is, ensure a normal service capability of the server.

When a network fault occurs, the administrator may perform configuration restoration or rollback on the server by using the client, so that the server runs normally again. In a related technology, when a network fault occurs, the client may restore the server to a factory default state, that is, restore configuration data in a running configuration datastore of the server to initial configuration data that is started before delivery.

However, the factory default state is not a restored state expected by the administrator, and the administrator further needs to perform a plurality of configuration operations on the server in the factory default state until the expected restored state is reached.

### SUMMARY

Embodiments of this application provide a configuration management method, apparatus, and system, a storage medium, and a program product, to quickly restore a server to an expected state through configuration rollback. Technical solutions are as follows.

According to a first aspect, a configuration management method is provided, and the method includes:

A server generates one or more pieces of backup configuration data, where each piece of backup configuration data corresponds to metadata, the metadata includes baseline indication information and a backup identifier, and the baseline indication information indicates whether the corresponding backup configuration data is baseline configuration data; the server receives a NETCONF configuration rollback request sent by a client; and the server performs configuration rollback based on metadata corresponding to the one or more pieces of backup configuration data and the NETCONF configuration rollback request.

In embodiments of this application, the backup configuration data generated by the server can be used for configuration rollback. In this way, an administrator can quickly restore the server to an expected state without performing a plurality of configuration operations. In addition, when configuration rollback is performed based on the metadata, in one case, it can be specified to roll back to the baseline configuration data. In addition, the metadata is structured data and has a unified view. The metadata can be used to perform flexible management on the backup configuration data, thereby reducing management difficulty.

Optionally, that a server generates one or more pieces of backup configuration data includes: The server generates, each time the server receives a NETCONF backup creation request, one piece of backup configuration data based on the NETCONF backup creation request; and/or the server generates one piece of backup configuration data based on a preset time; and/or the server generates, each time configuration updating is performed, one piece of backup configuration data based on configuration data after the configuration updating. That is, the client may request the server to create a backup, and the server may also automatically create a backup.

Optionally, in a case that the server receives a NETCONF backup creation request, if the NETCONF backup creation request includes baseline configuration data indication information, baseline indication information in metadata corresponding to the generated one piece of backup configuration data is the baseline configuration data indication information, where the baseline configuration data indication information includes a first value or a second value, the first value indicates that the corresponding backup configuration data is the baseline configuration data, and the second value indicates that the corresponding backup configuration data is not the baseline configuration data. Optionally, if the NETCONF backup creation request does not include the baseline configuration data indication information, the baseline indication information in the metadata corresponding to the generated one piece of backup configuration data is the second value. That is, if the client does not specify whether to use the backup configuration data that the client requests to create currently as the baseline configuration data, the server considers that this backup is not used as a baseline by default. In short, the client specifies the baseline.

Optionally, the one or more pieces of backup configuration data generated by the server include a backup of configuration data in a running configuration datastore. Optionally, the one or more pieces of backup configuration data are stored in a historical configuration datastore. Optionally, the backup identifier in the metadata corresponding to the backup configuration data is a backup name, a creation time, or a backup label.

Optionally, the NETCONF configuration rollback request includes rollback target indication information, and the rollback target indication information indicates to roll back to the baseline configuration data; and that the server performs configuration rollback based on metadata corresponding to the one or more pieces of backup configuration data and the NETCONF configuration rollback request includes: The server determines the baseline configuration data from the one or more pieces of backup configuration data based on the rollback target indication information and baseline indication information in the metadata corresponding to the one or more pieces of backup configuration data; and the server rolls back the configuration data in the running configuration datastore to the baseline configuration data. That is, the client specifies to roll back the server to baseline configuration.

Optionally, the NETCONF configuration rollback request includes rollback target indication information, the rollback target indication information indicates to roll back to first backup configuration data, and metadata corresponding to the first backup configuration data includes a first backup identifier; and that the server performs configuration rollback based on metadata corresponding to the one or more pieces of backup configuration data and the NETCONF configuration rollback request includes: The server determines the first backup configuration data corresponding to the first backup identifier from the one or more pieces of backup configuration data; and the server rolls back the configuration data in the running configuration datastore to the first backup configuration data. The rollback target indication information includes the first backup identifier or a target time. If the rollback target indication information includes the target time, the rollback target indication information indicates to roll back to one piece of backup configuration data whose creation time is closest to the target time, and the backup configuration data is the first backup configuration data corresponding to the first backup identifier. If the rollback target indication information includes the first backup identifier, the rollback target indication information indicates to roll back to the first backup configuration data corresponding to the first backup identifier.

Optionally, the method further includes: The server receives a NETCONF data comparison request sent by the client, where the NETCONF data comparison request includes first configuration data to be delivered; the server compares the first configuration data with second configuration data to obtain a first comparison result, where the first comparison result includes a differential part between the first configuration data and the second configuration data, and the second configuration data is data in the one or more pieces of backup configuration data; and the server sends the first comparison result to the client. That is, the one or more pieces of backup configuration data generated by the server can be further used for configuration comparison before configuration delivery, to reduce configuration errors.

Optionally, the NETCONF data comparison request further includes comparison object indication information; and before the server compares the first configuration data with the second configuration data, the method further includes: The server determines the second configuration data from the one or more pieces of backup configuration data based on the comparison object indication information and the metadata corresponding to the one or more pieces of backup configuration data.

Optionally, the comparison object indication information includes indication information indicating that a comparison object is the baseline configuration data; and that the server determines the second configuration data from the one or more pieces of backup configuration data based on the comparison object indication information and the metadata corresponding to the one or more pieces of backup configuration data includes: The server determines the second configuration data from the one or more pieces of backup configuration data based on the comparison object indication information and the baseline indication information in the metadata corresponding to the one or more pieces of backup configuration data, where the second configuration data is data in the baseline configuration data. That is, the client specifies to compare configuration data to be delivered with the baseline configuration data. In short, this solution provides baseline reference and guidance before configuration delivery.

Optionally, the comparison object indication information includes a second backup identifier; and that the server determines the second configuration data from the one or more pieces of backup configuration data based on the comparison object indication information and the metadata corresponding to the one or more pieces of backup configuration data includes: The server determines the second configuration data from the one or more pieces of backup configuration data based on the comparison object indication information and each backup identifier in the metadata corresponding to the one or more pieces of backup configuration data, where the second configuration data is data in backup configuration data corresponding to the second backup identifier. That is, the client may alternatively specify to compare the configuration data to be delivered with any backup configuration data.

Optionally, the comparison object indication information further includes a filter, and that the server determines the second configuration data from the one or more pieces of backup configuration data includes: The server determines reference backup configuration data from the one or more pieces of backup configuration data; and the server determines the second configuration data from the reference backup configuration data based on the filter. That is, some data that needs to be compared is filtered by using the filter. In other words, a granularity of configuration comparison may be a datastore granularity, or may be less than a datastore granularity, for example, a data node granularity.

Optionally, the method further includes: The server receives a first NETCONF backup deletion request, where the first NETCONF backup deletion request includes a third backup identifier; and the server deletes third backup configuration data corresponding to the third backup identifier from the one or more pieces of backup configuration data.

Optionally, the method further includes: The server receives a second NETCONF backup deletion request, where the second NETCONF backup deletion request includes a first backup label; and the server deletes all backup configuration data corresponding to the first backup label from the one or more pieces of backup configuration data. The first backup label corresponds to at least one piece of backup configuration data. That is, the client may request to delete all backup configuration data identified by a backup label in batches.

Optionally, the method further includes: The server receives a third NETCONF backup deletion request, where the third NETCONF backup deletion request includes a first creator; and the server deletes all backup configuration data created by the first creator from the one or more pieces of backup configuration data. The first creator creates at least one piece of backup configuration data. That is, the client may request to delete all backup configuration data created by a creator in batches.

Optionally, the server further deletes metadata corresponding to the deleted backup configuration data.

Optionally, the method further includes: The server receives a first NETCONF backup configuration data query request, where the first NETCONF backup configuration data query request includes query target indication information, and the query target indication information indicates that a query target is the baseline configuration data; and that the server queries the one or more pieces of backup configuration data for the baseline configuration data based on the query target indication information and the baseline indication information in the metadata corresponding to the one or more pieces of backup configuration data, to obtain a first query result; the server sends a first backup configuration data query response, where the first backup configuration data query response includes the first query result.

Optionally, the method further includes: The server receives a second NETCONF backup configuration data query request, where the second NETCONF backup configuration data query request includes a fourth backup identifier; the server queries the one or more pieces of backup configuration data for fourth backup configuration data corresponding to the fourth backup identifier, to obtain a second query result; and the server sends a second backup configuration data query response, where the second backup configuration data query response includes the second query result.

Optionally, the method further includes: The server receives a NETCONF metadata query request sent by the client, and sends a metadata query response to the client. The metadata query response includes the metadata corresponding to one or more pieces of backup configuration data generated by the server.

Optionally, the method further includes: The server receives a NETCONF metadata update request, where the NETCONF metadata update request includes baseline configuration data update indication information; and the server updates baseline indication information in metadata corresponding to one piece of backup configuration data indicated by the baseline configuration data update indication information. In other words, in this solution, the baseline configuration data can be updated by updating the baseline indication information in the metadata.

According to a second aspect, a configuration management method is provided, and the method includes:

A client sends a NETCONF configuration rollback request to a server, to indicate the server to perform configuration rollback based on the NETCONF configuration rollback request and metadata corresponding to one or more pieces of backup configuration data, where the one or more pieces of backup configuration data are generated by the server, each piece of backup configuration data corresponds to metadata, the metadata includes baseline indication information and a backup identifier, and the baseline indication information indicates whether the corresponding backup configuration data is baseline configuration data.

In embodiments of this application, the backup configuration data generated by the server can be used for configuration rollback. In this way, an administrator can quickly restore the server to an expected state without performing a plurality of configuration operations. In addition, when configuration rollback is performed based on the metadata, in one case, it can be specified to roll back to the baseline configuration data. In addition, the metadata is structured data and has a unified view. The metadata can be used to perform flexible management on the backup configuration data, thereby reducing management difficulty.

Optionally, the NETCONF configuration rollback request includes rollback target indication information, and the rollback target indication information indicates the server to roll back configuration to the baseline configuration data. The NETCONF configuration rollback request enables the server to determine the baseline configuration data from the one or more pieces of backup configuration data based on the rollback target indication information and baseline indication information in the metadata corresponding to the one or more pieces of backup configuration data, so that the server rolls back configuration data in a running configuration datastore to the baseline configuration data. That is, the client specifies to roll back the server to baseline configuration.

Optionally, the NETCONF configuration rollback request includes rollback target indication information, the rollback target indication information indicates the server to roll back configuration to first backup configuration data, and metadata corresponding to the first backup configuration data includes a first backup identifier. The NETCONF configuration rollback request enables the server to determine the first backup configuration data corresponding to the first backup identifier from the one or more pieces of backup configuration data, so that the server rolls back configuration data in a running configuration datastore to the first backup configuration data. The rollback target indication information includes the first backup identifier or a target time. If the rollback target indication information includes the target time, the rollback target indication information indicates the server to roll back to one piece of backup configuration data whose creation time is closest to the target time, and the backup configuration data is the first backup configuration data corresponding to the first backup identifier. If the rollback target indication information includes the first backup identifier, the rollback target indication information indicates the server to roll back to the first backup configuration data corresponding to the first backup identifier.

Optionally, the method further includes: The client sends a NETCONF backup creation request to the server, to indicate the server to generate one piece of backup configuration data based on the NETCONF backup creation request. That is, the client may request the server to create a backup.

Optionally, the method further includes: The client sends a NETCONF data comparison request to the server, where the NETCONF data comparison request includes first configuration data to be delivered, the NETCONF data comparison request indicates the server to compare the first configuration data with second configuration data, and the second configuration data is data in the one or more pieces of backup configuration data; and the client receives a first comparison result sent by the server, where the first comparison result includes a differential part between the first configuration data and the second configuration data. That is, the one or more pieces of backup configuration data generated by the server can be further used for configuration comparison before configuration delivery, to reduce configuration errors.

Optionally, the method further includes: The client generates a NETCONF configuration update request based on the first comparison result and the first configuration data; and the client sends the NETCONF configuration update request to the server, to indicate the server to perform configuration updating based on the NETCONF configuration update request. That is, the client may correct configuration data to be delivered based on a comparison result, to reduce configuration errors.

Optionally, the method further includes: The client obtains the configuration data in the running configuration datastore; and the client compares the configuration data in the running configuration datastore with the baseline configuration data to obtain a second comparison result. For example, when a network fault occurs, running configuration may be compared with baseline configuration to help an administrator check whether the network fault is caused by incorrect configuration. That is, the baseline configuration data can be used for fault locating or troubleshooting.

Optionally, the method further includes: The client sends a first NETCONF backup deletion request to the server, where the first NETCONF backup deletion request includes a third backup identifier, and the first NETCONF backup deletion request indicates the server to delete third backup configuration data corresponding to the third backup identifier from the one or more pieces of backup configuration data.

Optionally, the method further includes: The client sends a second NETCONF backup deletion request to the server, where the second NETCONF backup deletion request includes a first backup label, and the second NETCONF backup deletion request indicates the server to delete all backup configuration data identified by the first backup label from the one or more pieces of backup configuration data. That is, the client may request to delete all backup configuration data identified by a backup label in batches.

Optionally, the method further includes: The client sends a third NETCONF backup deletion request to the server, where the third NETCONF backup deletion request includes a first creator, and the third NETCONF backup deletion request indicates the server to delete all backup configuration data created by the first creator from the one or more pieces of backup configuration data. That is, the client may request to delete all backup configuration data created by a creator in batches.

Optionally, the method further includes: The client sends a first NETCONF backup configuration data query request to the server, where the first NETCONF backup configuration data query request includes query target indication information, and the query target indication information indicates that a query target is the baseline configuration data; and the client receives a first backup configuration data query response sent by the server, where the first backup configuration data query response includes a first query result, and the first query result is obtained after the server queries the one or more pieces of backup configuration data for the baseline configuration data based on the query target indication information and the baseline indication information in the metadata corresponding to the one or more pieces of configuration data.

Optionally, the method further includes: The client sends a second NETCONF backup configuration data query request to the server, where the second NETCONF backup configuration data query request includes a fourth backup identifier; and the client receives a second backup configuration data query response sent by the server, where the second backup configuration data query response includes a second query result, and the second query result is obtained after the server queries the one or more pieces of backup configuration data for fourth backup configuration data corresponding to the fourth backup identifier.

Optionally, the method further includes: The client sends a NETCONF metadata update request to the server, where the NETCONF metadata update request includes baseline configuration data update indication information, and the NETCONF metadata update request indicates the server to update baseline indication information in metadata corresponding to one piece of backup configuration data indicated by the baseline configuration data update indication information. In other words, in this solution, the baseline configuration data can be updated by updating the baseline indication information in the metadata.

According to a third aspect, a configuration management apparatus is provided, and the configuration management apparatus has a function of implementing behavior of the configuration management method in the first aspect. The configuration management apparatus includes one or more modules, and the one or more modules are configured to implement the configuration management method provided in the first aspect.

In other words, a configuration management apparatus is provided. The apparatus is used in a server, and the apparatus includes:
a generation module, configured to generate one or more pieces of backup configuration data, where each piece of backup configuration data corresponds to metadata, the metadata includes baseline indication information and a backup identifier, and the baseline indication information indicates whether the corresponding backup configuration data is baseline configuration data;
a first receiving module, configured to receive a NETCONF configuration rollback request sent by a client; and
a configuration rollback module, configured to perform configuration rollback based on metadata corresponding to the one or more pieces of backup configuration data and the NETCONF configuration rollback request.

Optionally, the NETCONF configuration rollback request includes rollback target indication information, and the rollback target indication information indicates to roll back to the baseline configuration data; and
the configuration rollback module includes:
a first determining submodule, configured to determine the baseline configuration data from the one or more pieces of backup configuration data based on the rollback target indication information and baseline indication information in the metadata corresponding to the one or more pieces of backup configuration data; and
a first rollback submodule, configured to roll back configuration data in a running configuration datastore to the baseline configuration data.

Optionally, the NETCONF configuration rollback request includes rollback target indication information, the rollback target indication information indicates to roll back to first backup configuration data, and metadata corresponding to the first backup configuration data includes a first backup identifier; and
the configuration rollback module includes:
a second determining submodule, configured to determine the first backup configuration data corresponding to the first backup identifier from the one or more pieces of backup configuration data; and
a second rollback submodule, configured to roll back configuration data in a running configuration datastore to the first backup configuration data.

Optionally, the generation module includes:
a first generation submodule, configured to generate, each time a NETCONF backup creation request is received, one piece of backup configuration data based on the NETCONF backup creation request; and/or
a second generation submodule, configured to generate at least one piece of backup configuration data based on a preset time; and/or
a third generation submodule, configured to generate, each time configuration updating is performed, one piece of backup configuration data based on configuration data after the configuration updating.

Optionally, in a case that the first generation submodule receives a NETCONF backup creation request, if the NETCONF backup creation request includes baseline configuration data indication information, baseline indication information in metadata corresponding to the generated one piece of backup configuration data is the baseline configuration data indication information, where the baseline configuration data indication information includes a first value or a second value, the first value indicates that the corresponding backup configuration data is the baseline configuration data, and the second value indicates that the corresponding backup configuration data is not the baseline configuration data.

Optionally, the apparatus further includes:
a second receiving module, configured to receive a NETCONF data comparison request sent by the client, where the NETCONF data comparison request includes first configuration data to be delivered;
a comparison module, configured to compare the first configuration data with second configuration data to obtain a first comparison result, where the first comparison result includes a differential part between the first configuration data and the second configuration data, and the second configuration data is data in the one or more pieces of backup configuration data; and
a first sending module, configured to send the first comparison result to the client.

Optionally, the NETCONF data comparison request further includes comparison object indication information; and
the apparatus further includes:
a determining module, configured to determine the second configuration data from the one or more pieces of backup configuration data based on the comparison object indication information and the metadata corresponding to the one or more pieces of backup configuration data.

Optionally, the comparison object indication information includes indication information indicating that a comparison object is the baseline configuration data; and
the determining module includes:
a third determining submodule, configured to determine the second configuration data from the one or more pieces of backup configuration data based on the comparison object indication information and the baseline indication information in the metadata corresponding to the one or more pieces of backup configuration data, where the second configuration data is data in the baseline configuration data.

Optionally, the comparison object indication information includes a second backup identifier; and
the determining module includes:
a third determining submodule, configured to determine the second configuration data from the one or more pieces of backup configuration data based on the comparison object indication information and each backup identifier in the metadata corresponding to the one or more pieces of backup configuration data, where the second configuration data is data in backup configuration data corresponding to the second backup identifier.

Optionally, the comparison object indication information further includes a filter; and
the third determining submodule is configured to:
determine reference backup configuration data from the one or more pieces of backup configuration data; and
determine the second configuration data from the reference backup configuration data based on the filter.

Optionally, the apparatus further includes:
a third receiving module, configured to receive a first NETCONF backup deletion request, where the first NETCONF backup deletion request includes a third backup identifier; and
a backup deletion module, configured to delete third backup configuration data corresponding to the third backup identifier from the one or more pieces of backup configuration data.

Optionally, the apparatus further includes:
a fourth receiving module, configured to receive a NETCONF metadata update request, where the NETCONF metadata update request includes baseline configuration data update indication information; and
a metadata updating module, configured to update baseline indication information in metadata corresponding to one piece of backup configuration data indicated by the baseline configuration data update indication information.

Optionally, the apparatus further includes:
a fifth receiving module, configured to receive a first NETCONF backup configuration data query request, where the first NETCONF backup configuration data query request includes query target indication information, and the query target indication information indicates that a query target is the baseline configuration data;
a query module, configured to query the one or more pieces of backup configuration data for the baseline configuration data based on the query target indication information and the baseline indication information in the metadata corresponding to the one or more pieces of backup configuration data, to obtain a first query result; and
a second sending module, configured to send a first backup configuration data query response, where the first backup configuration data query response includes the first query result.

Optionally, the one or more pieces of backup configuration data include a backup of the configuration data in the running configuration datastore.

According to a fourth aspect, a configuration management apparatus is provided, and the configuration management apparatus has a function of implementing behavior of the configuration management method in the second aspect. The configuration management apparatus includes one or more modules, and the one or more modules are configured to implement the configuration management method provided in the second aspect.

In other words, a configuration management apparatus is provided. The apparatus is used in a client, and the apparatus includes:
a first sending module, configured to send a NETCONF configuration rollback request to a server, to indicate the server to perform configuration rollback based on the NETCONF configuration rollback request and metadata corresponding to one or more pieces of backup configuration data, where the one or more pieces of backup configuration data are generated by the server, each piece of backup configuration data corresponds to metadata, the metadata includes baseline indication information and a backup identifier, and the baseline indication information indicates whether the corresponding backup configuration data is baseline configuration data.

Optionally, the apparatus further includes:
a second sending module, configured to send a NETCONF backup creation request to the server, to indicate the server to generate one piece of backup configuration data based on the NETCONF backup creation request.

Optionally, the apparatus further includes:
a third sending module, configured to send a NETCONF data comparison request to the server, where the NETCONF data comparison request includes first configuration data to be delivered, the NETCONF data comparison request indicates the server to compare the first configuration data with second configuration data, and the second configuration data is data in the one or more pieces of backup configuration data; and
a first receiving module, configured to receive a first comparison result sent by the server, where the first comparison result includes a differential part between the first configuration data and the second configuration data.

Optionally, the apparatus further includes:
a generation module, configured to generate a NETCONF configuration update request based on the first comparison result and the first configuration data; and
a fourth sending module, configured to send the NETCONF configuration update request to the server, to indicate the server to perform configuration updating based on the NETCONF configuration update request.

Optionally, the apparatus further includes:
an obtaining module, configured to obtain configuration data in a running configuration datastore; and
a comparison module, configured to compare the configuration data in the running configuration datastore with the baseline configuration data to obtain a second comparison result.

Optionally, the apparatus further includes:
a fifth sending module, configured to send a first NETCONF backup deletion request to the server, where the first NETCONF backup deletion request includes a third backup identifier, and the first NETCONF backup deletion request indicates the server to delete third backup configuration data corresponding to the third backup identifier from the one or more pieces of backup configuration data.

Optionally, the apparatus further includes:
a sixth sending module, configured to send a NETCONF metadata update request to the server, where the NETCONF metadata update request includes baseline configuration data update indication information, and the NETCONF metadata update request indicates the server to update baseline indication information in metadata corresponding to one piece of backup configuration data indicated by the baseline configuration data update indication information.

Optionally, the apparatus further includes:
a seventh sending module, configured to send a first NETCONF backup configuration data query request to the server, where the first NETCONF backup configuration data query request includes query target indication information, and the query target indication information indicates that a query target is the baseline configuration data; and
a second receiving module, configured to receive a first backup configuration data query response sent by the server, where the first backup configuration data query response includes a first query result, and the first query result is obtained after the server queries the one or more pieces of backup configuration data for the baseline configuration data based on the query target indication information and baseline indication information in the metadata corresponding to the one or more pieces of configuration data.

According to a fifth aspect, a configuration management system is provided, and the configuration management system includes a server and a client. The server is configured to implement the steps of the configuration management method provided in the first aspect. The client is configured to implement the steps of the configuration management method provided in the second aspect.

According to a sixth aspect, a communication device is provided. The communication device includes a processor and a memory. The memory is configured to store a program for performing the configuration management method provided in the first aspect or the second aspect, and store data used to implement the configuration management method provided in the first aspect or the second aspect. The processor is configured to execute the program stored in the memory. An operation apparatus of the storage device may further include a communication bus, and the communication bus is configured to establish a connection between the processor and the memory.

According to a seventh aspect, a computer-readable storage medium is provided, where the computer-readable storage medium stores instructions, and when the instructions are run on a computer, the computer is enabled to perform the configuration management method according to the first aspect or the second aspect.

According to an eighth aspect, a computer program product including instructions is provided. When the computer program product is run on a computer, the computer is enabled to perform the configuration management method according to the first aspect or the second aspect.

Technical effects obtained in the third aspect, the fourth aspect, the fifth aspect, the sixth aspect, the seventh aspect, and the eighth aspect are similar to technical effects obtained by using corresponding technical means in the first aspect or the second aspect. Details are not described herein again.

The technical solutions provided in embodiments of this application can bring at least the following beneficial effects:

In embodiments of this application, backup configuration data generated by a server can be used for configuration rollback. In this way, an administrator can quickly restore the server to an expected state without performing a plurality of configuration operations. In addition, the backup configuration data corresponds to metadata, and the metadata includes baseline indication information and a backup identifier, where the baseline indication information indicates whether the corresponding backup configuration data is baseline configuration data. In this way, when configuration rollback is performed based on the metadata, in one case, it can be specified to roll back to the baseline configuration data. In addition, the metadata is structured data and has a unified view. The metadata can be used to perform flexible unified management on the backup configuration data, thereby reducing management difficulty.

### BRIEF DESCRIPTION OF DRAWINGS

FIG. 1 is a diagram of a system architecture related to a configuration management method according to an embodiment of this application;
FIG. 2 is a schematic diagram of a structure of a communication device according to an embodiment of this application;
FIG. 3 is a flowchart of a configuration management method according to an embodiment of this application;
FIG. 4 is a flowchart of another configuration management method according to an embodiment of this application;
FIG. 5 is a flowchart of a configuration updating method according to an embodiment of this application;
FIG. 6 is a flowchart of still another configuration management method according to an embodiment of this application;
FIG. 7 is a flowchart of still another configuration management method according to an embodiment of this application;
FIG. 8 is a flowchart of a metadata query method according to an embodiment of this application;
FIG. 9 is a schematic diagram of a structure of a configuration management apparatus according to an embodiment of this application; and
FIG. 10 is a schematic diagram of a structure of another configuration management apparatus according to an embodiment of this application.

### DESCRIPTION OF EMBODIMENTS

To make the objectives, technical solutions, and advantages of embodiments of this application clearer, the following further describes implementations of this application in detail with reference to the accompanying drawings.

For ease of understanding, some nouns and terms in embodiments of this application are first explained.

Network configuration protocol (NETCONF): a mechanism for managing a network device. An administrator can use this mechanism to perform configuration management on a network device through a client. The NETCONF is a network configuration and management protocol modeled through YANG and based on an extensible markup language (extensible markup language, XML), and implements communication between the client and the network device based on a remote procedure call (remote procedure call, RPC) mechanism. The network configuration protocol (NETCONF) is defined in the request for comments (request for comments, RFC) 6241 and the RFC 8526.

Representational state transfer configuration protocol (representational state transfer configuration protocol, RESTCONF): a stateless protocol based on the hypertext transfer protocol (hypertext transfer protocol, HTTP) defined in the RFC 8040. The RESTCONF uses an HTTP method to perform configuration management, provides YANG-based modeling for configuration datastores, and the like, and supports operations such as adding, deleting, modifying, and querying configuration data.

Client/Server (client/server, C/S) architecture: Both a NETCONF and a RESTCONF use the C/S architecture. A network management device or a controller serves as a client, and a network device (a network element device such as a router, a switch, or a bridge) serves as a server. In embodiments of this application, the client communicates with the server based on the NETCONF or the RESTCONF. The following embodiments are all described by using an example in which the client and the server communicate with each other based on the NETCONF.

Network management datastore architecture (network management datastore architecture, NMDA): a network multi-datastore architecture defined in the RFC 8342. A running (running) configuration data store, a candidate (candidate) configuration datastore, a startup (startup) configuration datastore, an intended (intended) configuration datastore, and an operational (operational) configuration datastore are defined. The NMDA also supports extension of other datastores.

Datastore (datastore): The NETCONF/RESTCONF allows defining a plurality of configuration datastores (also referred to as datasets, databases, configuration databases, or the like) to store configuration data, status information, and the like of a network device. For example, the running configuration datastore is used to store configuration data that takes effect in a running process of the network device. The candidate configuration datastore is used to store configuration data that is configured for the network device but does not take effect, that is, configuration data edited by a storage administrator, but has not been submitted and takes effect. After the candidate configuration datastore is submitted to the running configuration datastore, the configuration data takes effect. The startup configuration datastore is used to store configuration data to be used during next startup of the network device. The operational datastore is a datastore read-only for the client, and stores all data that takes effect for a current service when the network device runs, including user configuration data, system configuration data, and some statistics data. The NMDA allows defining a new configuration datastore, for example, a historical configuration datastore defined in embodiments of this application.

YANG (yet another next generation): This was initially designed as a data modeling language for the NETCONF.

YANG model: A data model established by using a YANG data modeling language is referred to as a YANG model. The YANG model may be maintained by a NETCONF client and server. The YANG model uses a tree structure to express constructed data, and the data can be managed by the NETCONF or RESTCONF. Data instantiated by using the YANG model may be stored in an XML or JSON encoding format.

YANG module (YANG module): One configuration datastore may include one or more YANG modules. That is, one configuration datastore may store configuration data, status information, and the like of a plurality of YANG modules.

Data node (node): One YANG module includes a plurality of data nodes, and the plurality of data nodes are organized in a tree structure. That is, one YANG module may store configuration data, status information, and the like of one or more data nodes.

XPATH (XML path): an XML path used to indicate a node in a tree structure instantiated based on a YANG model, that is, provide a capability of searching for a node in a serialized XML.

Golden configuration (golden configuration, Golden-config): a configuration version used as ideal configuration in configuration compliance management. The golden configuration may be used for configuration rollback, configuration delivery reference, configuration check or fault locating, and the like. In embodiments of this application, the golden configuration is also referred to as baseline configuration.

Configuration rollback: also referred to as configuration restoration, configuration fallback, or the like. The configuration rollback is a configuration operation performed on a network device. For example, after a user submits a configuration through a client, if the user finds that the configuration is incorrect, a fault occurs, or the configuration causes an unexpected result to the network, the user needs to roll back or restore the configuration of the network device to an original configuration or restore the configuration of the network device to a configuration in a state.

Metadata: data used to describe data, for example, attribute information used to describe data. In embodiments of this application, the metadata is data used to describe backup configuration data. For example, the metadata includes a backup name, a backup time, a creator, and the like of the backup configuration data.

A system architecture used in embodiments of this application is described below. It should be noted that a network architecture and service scenarios described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and emergence of new service scenarios, the technical solutions provided in embodiments of this application are also applicable to similar technical problems.

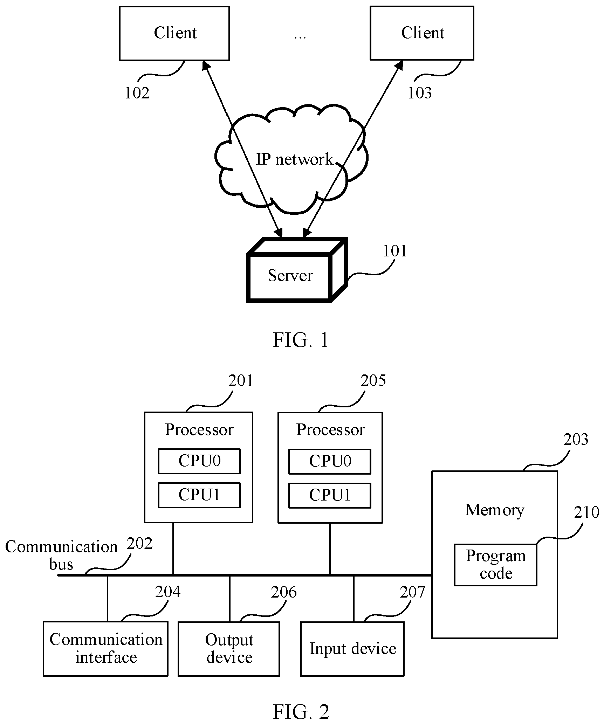

FIG. 1 is a diagram of a system architecture related to a configuration management method according to an embodiment of this application. The system may be referred to as a configuration management system, a network management system (network management system, NMS), a NETCONF system, or the like. Refer to FIG. 1. The system includes a server 101 and one or more clients. In FIG. 1, an example in which the system includes a client 102 and a client 103 is used for schematic description. In this embodiment of this application, each client is connected to the server 101 in a wired or wireless manner to perform communication. As shown in FIG. 1, both the client 102 and the client 103 communicate with the server 101 by using an Internet protocol (Internet protocol, IP) network.

The server 101 is configured to generate backup configuration data, where the backup configuration data corresponds to metadata. Any client is configured to send a NETCONF configuration rollback request to the server 101. The server 101 is further configured to perform configuration rollback based on the metadata corresponding to the backup configuration data and the received NETCONF configuration rollback request. The metadata includes baseline indication information and a backup identifier, and the baseline indication information indicates whether the corresponding backup configuration data is baseline configuration data. In this way, the client can be configured to indicate, by using the NETCONF configuration rollback request, the server 101 to roll back to the baseline configuration data or other specified backup configuration data.

Optionally, in addition to being used for configuration rollback, the backup configuration data backed up by the server 101 can also be used for configuration comparison, configuration check, fault location, and the like. The client is further configured to perform unified management on the backup configuration data, including adding backup configuration data, querying the backup configuration data, querying the metadata of the backup configuration data, modifying the baseline indication information in the metadata, deleting the backup configuration data and corresponding metadata, and the like.

In this embodiment of this application, the client may be installed and deployed on any computer device, for example, a server, a desktop computer, a notebook computer, or a mobile phone, or may be installed and deployed on a computing and storage resource of a cloud platform. The server may be a network device such as a router, a switch, a gateway, or a firewall. Optionally, the client may perform configuration management on the server by running an application program, a web page, or the like. For example, an administrator (also referred to as a network operation and maintenance personnel, a network manager, or the like) edits, submits, queries configuration data, and the like by using an application program running on the client.

Refer to FIG. 2. FIG. 2 is a schematic diagram of a structure of a communication device according to an embodiment of this application. Optionally, the communication device is the client or the server shown in FIG. 1, and the communication device includes one or more processors 201, a communication bus 202, a memory 203, and one or more communication interfaces 204.

The processor 201 is a general-purpose central processing unit (central processing unit, CPU), a network processor (network process, NP), a microprocessor, or one or more integrated circuits configured to implement the solutions of this application, for example, an application-specific integrated circuit (application-specific integrated circuit, ASIC), a programmable logic device (programmable logic device, PLD), or a combination thereof. Optionally, the PLD is a complex programmable logic device (complex programmable logic device, CPLD), a field programmable logic gate array (field programmable gate array, FPGA), a generic array logic (generic array logic, GAL), or any combination thereof.

The communication bus 202 is configured to transmit information between the foregoing components. Optionally, the communication bus 202 may include an address bus, a data bus, a control bus, and the like. For ease of representation, only one thick line is used to represent the bus in the figure, but this does not mean that there is only one bus or only one type of bus.

Optionally, the memory 203 is a read-only memory (read-only memory, ROM), a random access memory (random access memory, RAM), an electrically erasable programmable read-only memory (electrically erasable programmable read-only memory, EEPROM), an optical disc (including a compact disc read-only memory (compact disc read-only memory, CD-ROM), a compact disc, a laser disc, a digital versatile disc, a Blu-ray disc, or the like), a magnetic disk storage medium or another magnetic storage device, or any other medium that can be configured to carry or store expected program code in a form of an instruction or a data structure and that can be accessed by a computer. However, the memory is not limited thereto. The memory 203 exists independently, and is connected to the processor 201 through the communication bus 202, or the memory 203 is integrated with the processor 201.

The communication interface 204 is configured to communicate with another device or a communication network by using any apparatus such as a transceiver. The communication interface 204 includes a wired communication interface, and optionally, may further include a wireless communication interface. The wired communication interface is, for example, an Ethernet interface. Optionally, the Ethernet interface is an optical interface, an electrical interface, or a combination thereof. The wireless communication interface is a wireless local area network (wireless local area network, WLAN) interface, a cellular network communication interface or a combination thereof, or the like.

Optionally, in some embodiments, the communication device includes a plurality of processors, for example, a processor 201 and a processor 205 shown in FIG. 2. Each of the processors is a single-core processor or a multi-core processor. Optionally, the processor herein is one or more devices, circuits, and/or processing cores configured to process data (such as computer program instructions).

During specific implementation, in an embodiment, the communication device further includes an output device 206 and an input device 207. The output device 206 communicates with the processor 201, and may display information in a plurality of manners. For example, the output device 206 is a liquid crystal display (liquid crystal display, LCD), a light emitting diode (light emitting diode, LED) display device, a cathode ray tube (cathode ray tube, CRT) display device, or a projector (projector). The input device 207 communicates with the processor 201, and may receive an input from a user in a plurality of manners. For example, the input device 207 is a mouse, a keyboard, a touchscreen device, or a sensing device.

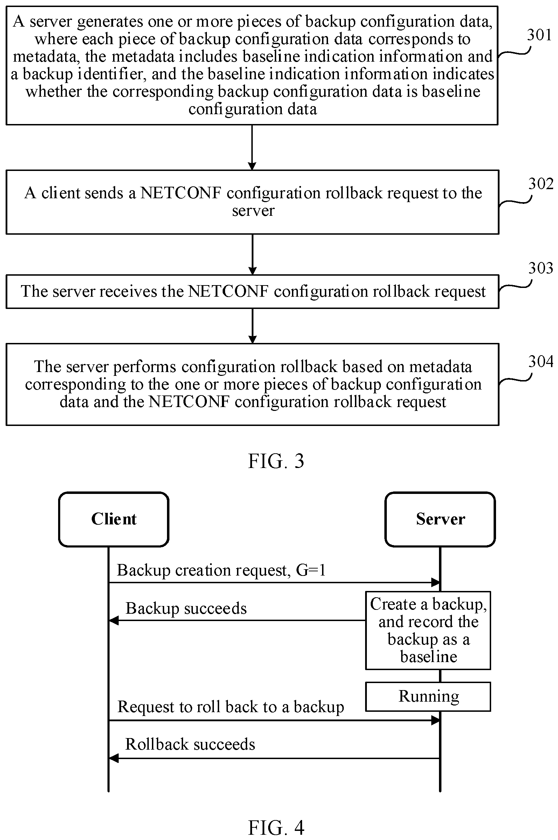

In some embodiments, the memory 203 is configured to store program code 210 for executing the solutions of this application, and the processor 201 may execute the program code 210 stored in the memory 203. The program code includes one or more software modules. The communication device can implement, by using the processor 201 and the program code 210 in the memory 203, the configuration management method provided in the following embodiment in FIG. 3.

FIG. 3 is a flowchart of a configuration management method according to an embodiment of this application. The method is applied to a configuration management system. Refer to FIG. 3. The method includes the following steps.

Step 301: A server generates one or more pieces of backup configuration data, where each piece of backup configuration data corresponds to metadata, the metadata includes baseline indication information and a backup identifier, and the baseline indication information indicates whether the corresponding backup configuration data is baseline configuration data.

It can be learned from the foregoing description that the server can generate backup configuration data for configuration rollback.

For the backup identifier corresponding to the backup configuration data, the backup identifier is used to uniquely identify the corresponding backup configuration data. Assuming that the metadata includes a backup name, and a piece of backup configuration data has a unique backup name, the backup name may be used as a backup identifier corresponding to the piece of backup configuration data. Assuming that the metadata includes a backup time (or a creation time), and a piece of backup configuration data has a unique backup time, the backup time may be used as a backup identifier corresponding to the piece of backup configuration data. Assuming that the metadata includes a backup label, and a piece of backup configuration data has a unique backup label, the backup label may be used as a backup identifier corresponding to the piece of backup configuration data. In other words, the backup identifier may be a backup name, a backup time, or a backup label that can be used as a unique identifier. In short, in an implementation, the metadata includes a backup name, a backup time, baseline indication information, and a backup label, where the backup name, the backup time, or the backup label may all be used as a backup identifier. Optionally, in some embodiments, the metadata further includes a creator (a creation main body) and/or a backup description. It should be noted that the backup identifier may alternatively be another identifier that can be used to uniquely identify the corresponding backup configuration data.

Optionally, the baseline indication information in the metadata is a first value or a second value, where the first value indicates that the corresponding backup configuration data is the baseline configuration data, and the second value indicates that the corresponding backup configuration data is not the baseline configuration data. For example, the first value is '1', and the second value is '0'; or the first value is 'true', and the second value is 'false'. Alternatively, the baseline indication information in the metadata may be represented in another form.

In this embodiment of this application, there are a plurality of implementations in which the server generates the backup configuration data. The following describes three implementations. It should be noted that the three implementations may be separately used, or may be used in combination. This is not limited in this embodiment of this application.

In a first implementation of backup, a client sends a NETCONF backup creation request (referred to as backup creation request for short) to the server, to indicate the server to generate one piece of backup configuration data based on the backup creation request. Each time the server receives a NETCONF backup creation request, the server generates one piece of backup configuration data based on the backup creation request. That is, the client requests a backup to trigger the server to perform backup. This manner is a one-time triggering manner.

Optionally, after generating one piece of backup configuration data based on the backup creation request, the server sends a backup creation response to the client, where the backup creation response is used to notify the client that the current backup succeeds. For example, the backup creation response includes backup creation success indication information, and the backup creation success indication information indicates that the current backup succeeds. Optionally, the backup creation response further includes metadata of the generated backup configuration data, and the metadata includes, for example, a creation time and a backup name. It should be noted that, if the backup on the server fails due to some reasons, the backup creation response sent by the server to the client is used to notify the client that the current backup fails. It should be further noted that, if the configuration management system includes a plurality of clients, and all the plurality of clients can perform configuration management on the server, the server may receive backup creation requests sent by different clients, and the server creates backup configuration data based on the received backup creation request sent by any client, and sends a backup creation response to the corresponding client.

For example, the baseline indication information in the metadata includes the first value or the second value. When the server receives a NETCONF backup creating request, if the backup creating request includes baseline configuration data indication information, baseline indication information in metadata corresponding to the generated one piece of generated backup configuration data is the baseline configuration data indication information, and the baseline configuration data indication information includes the first value or the second value. The baseline configuration data indication information indicates whether the created backup configuration data is the baseline configuration data. For example, if the baseline configuration data indication information included in the backup creation request indicates that the created backup configuration data is the baseline configuration data, the baseline indication information in the metadata corresponding to the generated one piece of backup configuration data is the first value. If the baseline configuration data indication information included in the backup creation request indicates that the created backup configuration data is not the baseline configuration data, the baseline indication information in the metadata corresponding to the generated one piece of backup configuration data is the second value. That is, the client may specify whether to use the backup configuration data that the client requests to create currently as the baseline configuration data.

Optionally, if the backup creation request does not include the baseline configuration data indication information, the baseline indication information in the metadata corresponding to the generated one piece of backup configuration data is the second value. That is, if the client does not specify whether to use the backup configuration data that the client requests to create currently as the baseline configuration data, the server considers that this backup is not used as a baseline by default.

Alternatively, if the backup creation request does not include the baseline configuration data indication information, and the server is set to use latest generated backup configuration data as the baseline configuration data by default, the baseline indication information in the metadata corresponding to the generated one piece of backup configuration data is the first value. If the backup creation request does not include the baseline configuration data indication information, and the server is not set to use the latest generated backup configuration data as the baseline configuration data by default, the baseline indication information in the metadata corresponding to the generated one piece of backup configuration data is the second value. That is, the server may alternatively determine, based on settings of the server, whether to use the latest generated backup configuration data as the baseline configuration data.

It should be noted that, in the following embodiments, assuming that if the backup creation request sent by the client does not include the baseline configuration data indication information, the server considers that this backup is not used as a baseline by default. In short, the client specifies the baseline, and the server does not automatically set the baseline.

It can be learned from the foregoing description that the backup configuration data corresponds to metadata. Therefore, each time the server generates one piece of backup configuration data, the server further generates corresponding metadata. In an implementation, the metadata includes a backup name, a backup time, baseline indication information, and a backup label. Optionally, the metadata further includes a creator and/or a backup description.

Optionally, in this embodiment of this application, the NETCONF protocol is extended, so that the client can request, by using a NETCONF backup creation request, the server to create backup configuration data. For example, a create-snapshot operation is defined to be used by the client to request a backup. Parameters in <create-snapshot> include <name>, <is_golden>, <label>, and <description>. The parameter <name> is used to carry the backup name, and the backup name may be set based on a specified naming rule, or may be set without a specified naming rule. The parameter <is_golden> (or may be <is_gold>) is used to carry the baseline configuration data indication information. Optionally, the baseline configuration data indication information is 'true' or 'false'. The parameter <label> is used to carry the backup label, and the backup label may be any label, for example, a creator and/or a backup purpose. The creator is, for example, admin, where admin indicates that the creator is an administrator user or that the creator is a client. Alternatively, based on different clients, creators are admin1, admin2, and the like, where admin1 indicates that the creator is a client 1, and admin2 indicates that the creator is a client 2. The backup purpose is, for example, rescue, where rescue indicates that the backup is used for emergency fault recovery. The parameter <description> is used to carry a backup description, where the backup description is prompt information or description information of corresponding backup data.

It should be noted that the four parameters <name>, <is_golden>, <label>, and <description> are all optional. In a case that <create-snapshot> in a backup creation request received by the server does not include the parameter <name>, the server can automatically generate a backup name, for example, generate a backup name based on a specified naming rule. In a case that <create-snapshot> in a backup creation request received by the server does not include the parameter <is_golden>, the server sets, by default, baseline indication information corresponding to generated backup configuration data to 'false'. In a case that <create-snapshot> in a backup creation request received by the server does not include the parameter <label>, metadata corresponding to backup configuration data generated by the server does not include the backup label, or the backup label is empty, or the server automatically sets the backup label in the corresponding metadata to 'admin'. In a case that <create-snapshot> in a backup creation request received by the server does not include the parameter <description>, metadata corresponding to backup configuration data generated by the server does not include the backup description, or the backup description is empty.

It should be further noted that, in an implementation, in addition to the foregoing parameters <name>, <is_golden>, <label>, and <description>, the metadata corresponding to the backup configuration data generated by the server further includes two parameters <creation-time> and <creator>. <creation-time> is used to carry a backup time, where the backup time is a system time at which the server generates the corresponding backup configuration data. <creator> is used to carry a creator. For example, in a case that a client requests to create a backup, the <creator> carries 'admin'.

For example, the client sends a NETCONF backup creation request to the server, where the backup creation request carries the following information: <create-snapshot> indicates to request to create one piece of backup configuration data. <name> indicates that the backup name is "admin_2021-09-26". <is_golden> is 'true', and indicates to use the backup configuration data generated this time as the baseline configuration data. <label> indicates that the backup label is 'admin, rescue', and <description> indicates that the backup configuration data generated this time is used for configuration restoration when a network error occurs.

```
          <rpc message-id="103"
                    xmlns="urn:ietf:params:xml:ns:netconf:base:1.0">
                <create-snapshot>
                  <name>admin_2021-09-26</name>
                  <is_golden>true</is_golden>
                  <label>admin, rescue</label>
                  <description>This is used to revert current configuration when an error
                  encountered</description>
                </create-snapshot>
          </rpc>
```

After the server generates one piece of backup configuration data based on the foregoing backup creation request, the server sends a backup creation response to the client, where the backup creation response carries the following information: <ok/> indicates that the backup creation succeeds.

```
          <rpc-reply message-id="103"
                  xmlns="urn:ietf:params:xml:ns:netconf:base:1.0">
             <ok/>
          </rpc-reply>
```

Optionally, in this embodiment of this application, the RESTCONF protocol may alternatively be extended, so that the client can request, by using a RESTCONF backup creation request, the server to create backup configuration data. In the RESTCONF protocol, an example of requesting for an RPC operation is implemented by sending an HTTP request: POST /restconf/operations/<operation>. A "create-snapshot" RPC operation is used as an example:

A RESTCONF client sends the following POST request to invoke the "create-snapshot" RPC operation:

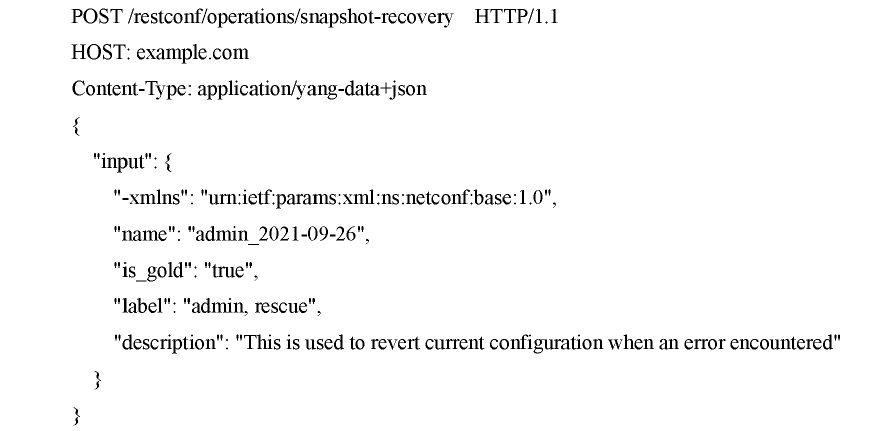

After the server generates one piece of backup configuration data based on the foregoing RESTCONF backup creation request, the server sends a backup creation response to the client, where the backup creation response carries an HTTP response code. For example, the HTTP response code is 204 No Content:

```
              HTTP/1.1 204 No Content
              Date: FRI, 03 Dec 2021 03:36:30 GMT
              Server: example-server
```

In a second implementation of backup, the server generates at least one piece of backup configuration data based on a preset time. The preset time includes a periodic time and/or an aperiodic time. Assuming that the preset time includes a periodic time, for example, 02:00 a.m. every day, or 06:00 a.m. every Monday, the server generates one piece of backup configuration data at intervals of a preset period. That is, if the preset time includes one or more periodic times (that is, at least one periodic time), the server generates a plurality of pieces of backup configuration data based on the one or more periodic times. Assuming that the preset time includes an aperiodic time, for example, a specified moment 01:00 a.m. on March 5, 2022, the server generates one piece of backup configuration data at the specified moment. That is, if the preset time includes an aperiodic time, the server generates one piece of backup configuration data based on the aperiodic time. If the preset time includes a plurality of aperiodic times, the server generates a plurality of pieces of backup configuration data based on the plurality of aperiodic times. It can be seen that the server can perform periodic backup and/or perform backup at a specified moment, where periodic backup is a periodic triggering manner, and backup at a specified moment is a one-time triggering manner.

Optionally, the client sends a first automatic backup request to the server, where the first automatic backup request includes indication information of the preset time. It should be noted that, the client may specify, by using one first automatic backup request, that the preset time includes at least one periodic time and/or at least one aperiodic time. After receiving the first automatic backup request, the server sets a function of supporting automatic backup based on a preset time. Then, the server can generate backup configuration data based on the preset time. Optionally, the client sends a first automatic backup cancellation request to the server, and after receiving the first automatic backup cancellation request, the server cancels the function of performing automatic backup based on a preset time. Optionally, the first automatic backup cancellation request includes indication information of a specified time and/or a periodic time, to indicate the server to cancel automatic backup at the specified time and/or the periodic time. In short, the client can set the server to support automatic backup based on a preset time, or set the server to not support automatic backup based on a preset time. Optionally, the server may alternatively be configured to support or not support the function of performing automatic backup based on a preset time before delivery.

In a third implementation of backup, each time the server performs configuration updating, the server backs up configuration data after the configuration updating, to generate one piece of backup configuration data. That is, the server performs automatic backup data after configuration updating. For example, each time the server receives a configuration update request, the server performs configuration updating and automatic backup. The configuration update request may be triggered and generated by an operation such as edit-config or commit. It can be learned that the server can perform automatic backup in an event triggering manner, and an event that triggers automatic backup of the server may be a common configuration update event, an important configuration upgrade event, or the like.

Optionally, the client sends a second automatic backup request to the server, where the second automatic backup request includes indication information of automatic backup during updating. After receiving the second automatic backup request, the server performs automatic backup after configuration updating. Optionally, the client sends a second automatic backup cancellation request to the server, and after receiving the second automatic backup cancellation request, the server cancels a function of performing automatic backup after configuration updating. In short, the client can set the server to support automatic backup after configuration updating, or set the server not to support automatic backup after configuration updating. Optionally, the server may alternatively be configured to support or not support the function of performing automatic backup after configuration updating before delivery.

Optionally, the first automatic backup request and the second automatic backup request are the same request. In other words, the client sends one automatic backup request to the server, to set the server to support both the function of performing automatic backup based on the preset time, and the function of performing automatic backup after configuration updating. Optionally, the first automatic backup cancellation request and the second automatic backup cancellation request are the same request. In other words, the client sends one automatic backup cancellation request to the server, to set the server not to support automatic backup based on a preset time nor automatic backup after configuration updating.

It should be noted that, in the second and third implementations of backup, the metadata corresponding to the backup configuration data generated by the server has a same structure as the metadata described in the first implementation of backup. For example, the metadata includes a backup name, a backup time, baseline indication information, a creator, a backup label, and a backup description. Optionally, in a case that the server automatically creates a backup, the server may automatically generate a backup name, for example, generate a backup name based on a specified naming rule. The server sets, by default, the baseline indication information corresponding to the generated backup configuration data to 'false'. Alternatively, the server sets, by default, baseline indication information corresponding to latest generated backup configuration data to 'true', and in a case that backup configuration data generated previously includes baseline configuration data, the server further updates baseline indication information corresponding to the previous baseline configuration data to 'false'. The server sets a creator corresponding to the generated backup configuration data to 'system', indicating that the creator is the server. The metadata corresponding to the backup configuration data generated by the server does not include the backup label, or the backup label is empty, or the server automatically sets the backup label in the corresponding metadata to 'system'. The metadata corresponding to the backup configuration data generated by the server does not include the backup description, or the backup description is empty.

In this embodiment of this application, one or more pieces of backup configuration data generated by the server include a backup of configuration data in a running (running) configuration datastore. Optionally, in some embodiments, the one or more pieces of backup configuration data further include a backup of configuration data in another configuration datastore other than the running configuration datastore. In the third implementation, the configuration update request received by the server is used to update the configuration data in the running configuration datastore. For example, the client requests configuration updating by using an edit-data operation or an edit-config operation, where the configuration update request includes operation indication information, the operation indication information indicates the client to request the server to perform an update operation on the running configuration datastore, and the server performs, based on the configuration update request, configuration updating on the configuration data in the running configuration datastore.

Optionally, the one or more pieces of backup configuration data generated by the server are stored in a form of a file. Alternatively, the one or more pieces of backup configuration data generated by the server are stored in a historical configuration datastore. The historical configuration datastore is a datastore that is defined in this embodiment of this application and that is used to store backup configuration data. For example, a historical configuration datastore named versioned is defined in the NMDA architecture, and the versioned datastore stores the one or more pieces of backup configuration data. Optionally, the metadata corresponding to the one or more pieces of backup configuration data is stored in an instantiated YANG model. That is, in this embodiment of this application, a YANG model used to store metadata corresponding to the backup configuration data is defined. Optionally, the YANG module to which the metadata belongs is a YANG module in an operational configuration datastore, that is, the metadata is stored in the operational configuration datastore. Optionally, the baseline indication information (is_golden), the backup label (label), the backup description (description), and the like in the metadata may alternatively be stored in a candidate or running configuration datastore. Optionally, in some other implementations, the backup configuration data and the corresponding metadata are stored in a same configuration datastore.

For example, in an implementation, a tree structure of the YANG model of the metadata is as follows:

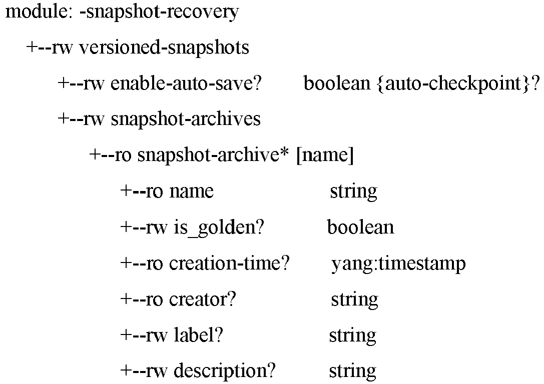

In the YANG model of the metadata, '?' indicates an optional node, 'rw' indicates a node that can be configured by a user, and 'ro' indicates a node that is read-only to a user. In a case that 'auto-checkpoint' is set to 'true', if 'enable-auto-save' is set to 'true', it indicates that a function of performing automatic backup when the configuration data in the running configuration datastore is updated of the server is enabled; and if 'enable-auto-save' is set to 'false', it indicates that the function of performing automatic backup when the configuration data in the running configuration datastore is updated of the server is disabled. If 'auto-checkpoint' is set to 'false', it indicates that the server does not support automatic backup when the configuration data in the running configuration datastore is updated.

In addition, in the YANG model, a type of the /versioned-snapshots/snapshot-archives/snapshot-archive node is a linked list (list), and one piece of backup configuration data (also referred to as snapshot data) is used as one linked list entry. Each linked list entry includes the following elements: name (backup name, also referred to as snapshot name), is_golden (whether the snapshot is gold configuration), creation-time (creation time, also referred to as backup time), creator (creator), label (backup label), and description (backup description).

The YANG model corresponding to the foregoing tree structure is as follows:

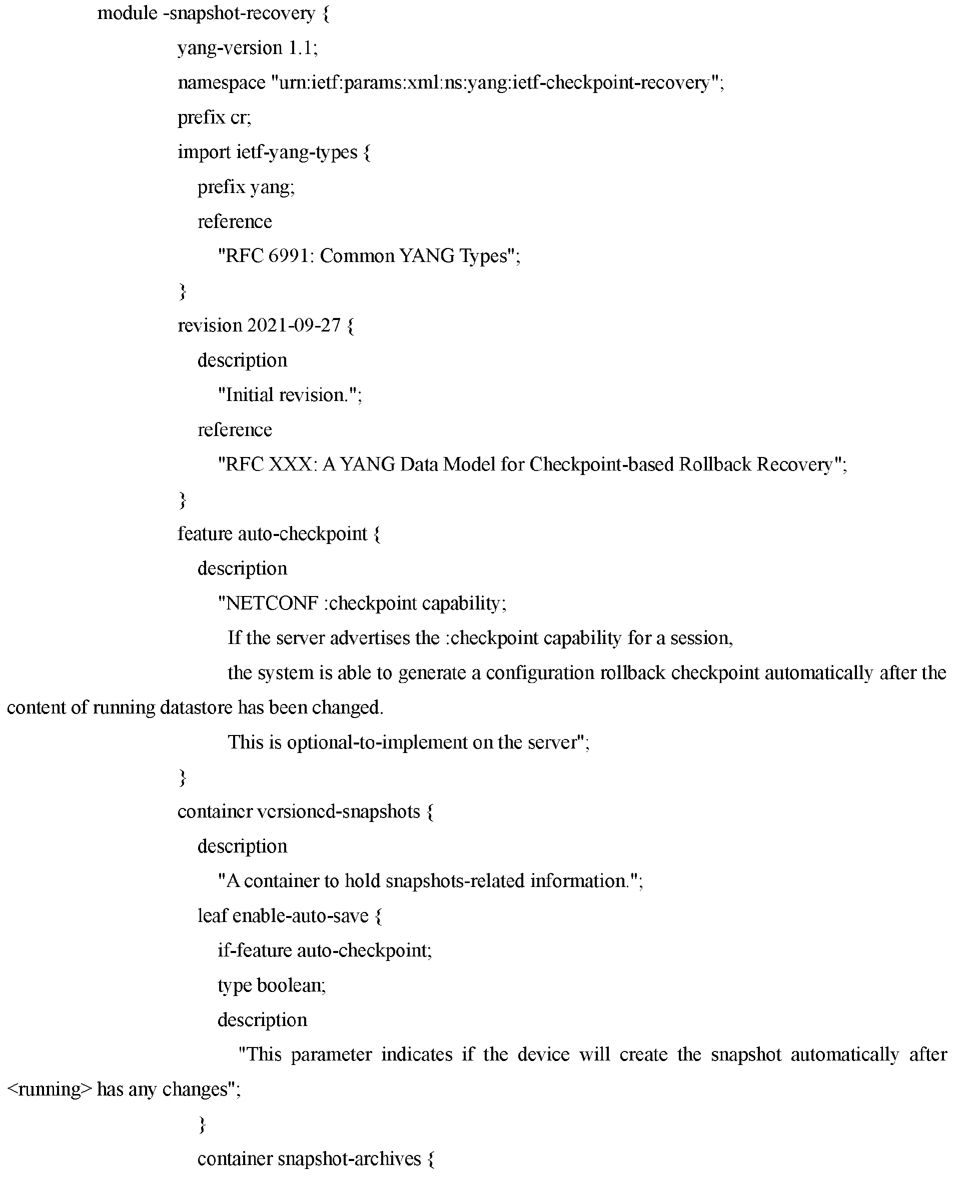

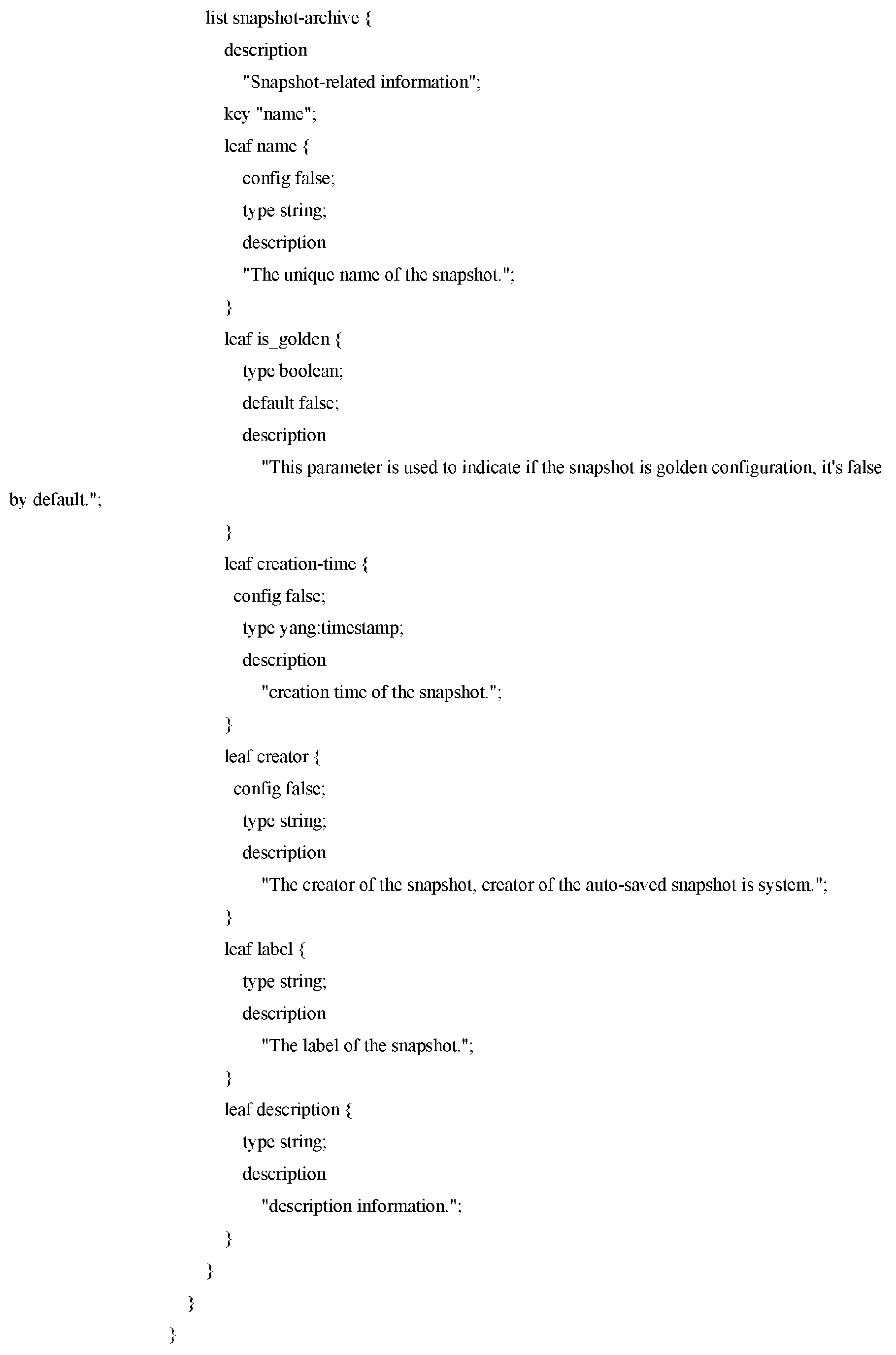

Optionally, the server synchronizes all the generated one or more pieces of backup configuration data to the client. For example, each time the server generates one piece of backup configuration data, the server synchronizes the currently generated one piece of backup configuration data to the client. Alternatively, the server synchronizes all backup configuration data generated after previous synchronization to the client at intervals of a period of time (for example, at intervals of a specified duration). Optionally, the server synchronizes the baseline configuration data in the one or more pieces of backup configuration data to the client, and does not synchronize backup configuration data other than the baseline configuration data in the one or more pieces of configuration data.

In step 301, several implementations that the server generates the backup configuration data and a structure of the metadata corresponding to the generated backup configuration data are described. It can be learned from the foregoing description that the backup configuration data generated by the server may be used for configuration rollback. The following describes an implementation process of configuration rollback by using step 302 to step 304.

Step 302: A client sends a NETCONF configuration rollback request to the server.

In this embodiment of this application, the client sends a NETCONF configuration rollback request (referred to as configuration rollback request for short) to the server, to request the server to perform configuration rollback based on the configuration rollback request and the metadata corresponding to the generated one or more pieces of backup configuration data.

The configuration rollback request includes rollback target indication information, and the rollback target indication information indicates to roll back to target configuration data. In some embodiments, the target configuration data is the baseline configuration data, that is, the rollback target indication information indicates to roll back to the baseline configuration data. For example, the rollback target indication information is 'golden'. In some other embodiments, the target configuration data is one piece of backup configuration data, for example, first backup configuration data. The rollback target indication information indicates to roll back to the first backup configuration data. For example, the rollback target indication information includes a first backup identifier, which indicates to roll back to the first backup configuration data corresponding to the first backup identifier, where the first backup identifier is, for example, 'bak_1632880229'. For another example, the rollback target indication information includes a second backup identifier, which indicates to roll back to second backup configuration data corresponding to the second backup identifier. For another example, the rollback target indication information includes a target time, and the rollback target indication information indicates to roll back to one piece of backup configuration data whose creation time is closest to the target time. The target time is any historical time. In some embodiments, the target time is a creation time corresponding to one piece of backup configuration data.

Alternatively, the configuration rollback request does not include rollback target indication information, and the configuration rollback request indicates the server to roll back to the baseline configuration data by default or roll back to latest generated backup configuration data by default. Alternatively, the configuration rollback request includes rollback target indication information, where the rollback target indication information not only indicates to roll back to the baseline configuration data, but also includes a first backup identifier, and the configuration rollback request indicates the server to roll back to baseline configuration data corresponding to the first backup identifier. It should be noted that the first backup identifier may be a backup identifier corresponding to the baseline configuration data, or may not be a backup identifier corresponding to the baseline configuration data.

Optionally, in this embodiment of this application, the NETCONF protocol is extended, so that the client can request, by using a NETCONF configuration rollback request, the server to perform configuration rollback. For example, a recover-snapshot operation is defined to be used by the client to request rollback. Assuming that the configuration rollback request sent by the client includes the rollback target indication information indicating to roll back to the baseline configuration data, the recover-snapshot operation includes a parameter <target>, and the parameter <target> is used to carry the rollback target indication information, for example, <target>golden</target>. Assuming that the rollback target indication information in the configuration rollback request sent by the client includes the first backup identifier, the recover-snapshot operation includes a parameter <snapshot-name>, and the parameter <snapshot-name> is used to carry the first backup identifier, for example, <snapshot-name>bak_1632880229</snapshot-name>. Assuming that the rollback target indication information in the configuration rollback request sent by the client includes the target time, the recover-snapshot operation includes a parameter <recover-time>, and the parameter <recover-time> is used to carry the target time, for example, <recover-time>2021-10-1</recover-time>.

For example, the configuration rollback request sent by the client includes the first backup identifier. The configuration rollback request includes the following information:

```
<rpc-reply message-id="101"
                  xmlns="urn:ietf:params:xml:ns:netconf:base:1.0">
          <recover-snapshot>
            <snapshot-name> bak_1632880229</snapshot-name>
          </recover-snapshot>
          </rpc-reply>
```

Optionally, in this embodiment of this application, the RESTCONF protocol may be extended, so that the client can request, by using a RESTCONF configuration rollback request, the server to perform configuration rollback. A specific implementation of performing configuration rollback based on the RESTCONF protocol is similar to the principle of the recover-snapshot operation in the implementation of performing configuration rollback based on the NETCONF protocol, and details are not described herein again.

Step 303: The server receives the NETCONF configuration rollback request.

Step 304: The server performs configuration rollback based on metadata corresponding to the one or more pieces of backup configuration data and the NETCONF configuration rollback request.

In this embodiment of this application, after receiving the configuration rollback request, the server performs configuration rollback based on the metadata corresponding to the generated one or more pieces of configuration data and the configuration rollback request, that is, rolls back the configuration data in the running configuration datastore.

In this embodiment of this application, if the NETCONF configuration rollback request includes the rollback target indication information, and the rollback target indication information indicates to roll back to the baseline configuration data, the server determines the baseline configuration data from the one or more pieces of backup configuration data based on the rollback target indication information and baseline indication information in the metadata corresponding to the one or more pieces of backup configuration data. The server rolls back the configuration data in the running configuration datastore to the baseline configuration data.

For example, assuming that the baseline indication information in the metadata includes a first value or a second value, and the first value indicates that the corresponding backup configuration data is the baseline configuration data, the server queries the metadata corresponding to the one or more pieces of backup configuration data for metadata whose baseline indication information is the first value, to obtain baseline metadata. The server queries, based on a baseline backup identifier in the baseline metadata, the one or more pieces of backup configuration data for backup configuration data corresponding to the baseline backup identifier, to obtain the baseline configuration data. The server rolls back the configuration data in the running configuration datastore to the baseline configuration data. The baseline metadata is metadata corresponding to the baseline configuration data, and the baseline backup identifier is a backup identifier corresponding to the baseline configuration data.

If the NETCONF configuration rollback request includes the rollback target indication information, the rollback target indication information indicates to roll back to first backup configuration data, metadata corresponding to the first backup configuration data includes a first backup identifier, and the rollback target indication information includes the first backup identifier. In this case, the server determines, from the one or more pieces of backup configuration data, the first backup configuration data corresponding to the first backup identifier. That is, the server queries, based on the configuration rollback request and each backup identifier in the metadata corresponding to the one or more pieces of backup configuration data, the one or more pieces of backup configuration data for the first backup configuration data corresponding to the first backup identifier. The server rolls back the configuration data in the running configuration datastore to the first backup configuration data.

If the NETCONF configuration rollback request includes the rollback target indication information, the rollback target indication information indicates to roll back to first backup configuration data, metadata corresponding to the first backup configuration data includes a first backup identifier, and the rollback target indication information includes a target time. In this case, the server queries the metadata corresponding to the one or more pieces of backup configuration data for metadata whose creation time is closest to the target time, to obtain target metadata. The server determines, from the one or more pieces of backup configuration data based on the first backup identifier in the target metadata, the first backup configuration data corresponding to the first backup identifier. That is, the server queries, based on the configuration rollback request and each creation time and each backup identifier in the metadata corresponding to the one or more pieces of backup configuration data, the one or more pieces of backup configuration data for the first backup configuration data corresponding to the first backup identifier. The server rolls back the configuration data in the running configuration datastore to the first backup configuration data.

If the NETCONF configuration rollback request does not include the rollback target indication information, the server rolls back the configuration data in the running configuration datastore to the baseline configuration data by default, or rolls back the configuration data to latest generated backup configuration data by default. The implementation process that the server rolls back the configuration data in the running configuration datastore to the baseline configuration data is similar to the implementation process in the case that the configuration rollback request includes the rollback target indication information, and details are not described herein again. An implementation process that the server rolls back the configuration data in the running configuration datastore to the latest generated backup configuration data is as follows: The server queries, based on each backup time in the metadata corresponding to the one or more pieces of backup configuration data, the one or more pieces of backup configuration data for backup configuration data whose backup time is latest, to obtain the latest generated backup configuration data. The server rolls back the configuration data in the running configuration datastore to the latest generated backup configuration data.

If the NETCONF configuration rollback request includes the rollback target indication information, and the rollback target indication information not only indicates to roll back to the baseline configuration data, but also includes a first backup identifier, assuming that the baseline indication information in the metadata includes a first value or a second value, the server queries the metadata corresponding to the one or more pieces of backup configuration data for metadata whose baseline indication information is the first value, to obtain baseline metadata. If a backup identifier in the baseline metadata is the first backup identifier, the server queries the one or more pieces of backup configuration data for first backup configuration data corresponding to the first backup identifier, where the first backup configuration data is the baseline configuration data, and the first backup identifier is a backup identifier corresponding to the baseline configuration data. The server rolls back the configuration data in the running configuration datastore to the first backup configuration data, that is, rolls back to the baseline configuration data. If the backup identifier in the baseline metadata is not the first backup identifier, it indicates that the configuration rollback request sent by the client is incorrect, and the current rollback on the server fails. Optionally, in a case that the rollback fails, the server sends a rollback failure response to the client. After receiving the rollback failure response, the client may resend a configuration rollback request to the server. In short, in a case that the configuration rollback request includes both the indication information indicating to roll back to the baseline configuration data and the first backup identifier, the server first finds, based on the baseline indication information, the baseline metadata corresponding to the baseline configuration data, and then verifies whether the first backup identifier is a backup identifier in the baseline metadata. If the verification succeeds, the server successfully rolls back to the baseline, that is, restores to the baseline configuration. Certainly, in some other embodiments, the server may first find the metadata corresponding to the first backup identifier, and then verify whether the baseline indication information in the metadata is the first value. If the verification succeeds, the server successfully rolls back to the baseline.

Optionally, after the rollback succeeds, the server sends a rollback success response to the client. For example, a rollback success response sent by the server to the client carries the following information: <ok/> indicates that the rollback succeeds.

```
          <rpc-reply message-id="101"
                 xmlns="urn:ietf:params:xml:ns:netconf:base:1.0">
            <ok/>
          </rpc-reply>
```

The foregoing describes a process in which the client sends a configuration rollback request to request the server to perform configuration rollback. FIG. 4 is a flowchart of another configuration management method according to an embodiment of this application. The foregoing embodiment is described again by using FIG. 4 herein. Refer to FIG. 4. In an implementation, the client sends a backup creation request to the server, where the backup creation request includes baseline configuration data indication information (for example, G=1), and the baseline configuration data indication information indicates to create one piece of backup configuration data as the baseline configuration data. After receiving the backup creation request, the server creates a backup based on the backup creation request, that is, generates one piece of backup configuration data, and records the generated backup configuration data as the baseline configuration data. The client can also send a configuration rollback request to the server, requesting to roll back to one piece of backup configuration data. After receiving the configuration rollback request, the server performs configuration rollback based on the configuration rollback request. After the rollback succeeds, the server sends a rollback success response to the client.

Optionally, in some embodiments, the server may have a self-repair or fault self-recovery capability. In this case, if a network fault occurs on the server, the server automatically performs configuration rollback, for example, automatically rolls back configuration data in a running configuration datastore to the baseline configuration data by default, or rolls back to latest generated backup configuration data by default, to ensure that the server quickly restores to a normal running state.

In this embodiment of this application, in addition to being used for configuration rollback, the one or more pieces of configuration data generated by the server can be further used for configuration comparison. For example, before configuration delivery, configuration data to be delivered is compared with one piece of backup configuration data (such as the baseline configuration data). For another example, when a network fault occurs, the configuration data in the running configuration datastore is compared with the baseline configuration data. Certainly, configuration comparison may also be performed in another case. This case is described in the following.

To avoid a network fault caused by incorrect delivered configuration, the client can request the server to compare the configuration data to be delivered with the baseline configuration data or other backup configuration data before delivering the configuration data. This ensures that the configuration data to be delivered is not incorrect. In an implementation, the client sends a NETCONF data comparison request (referred to as data comparison request for short) to the server, where the data comparison request includes first configuration data to be delivered, the data comparison request indicates the server to compare the first configuration data with second configuration data, and the second configuration data is data in the one or more pieces of backup configuration data generated by the server. The server receives the NETCONF data comparison request sent by the client, and compares the first configuration data with the second configuration data to obtain a first comparison result. The server sends the first comparison result to the client. The client receives the first comparison result sent by the server. The first comparison result includes a differential part between the first configuration data and the second configuration data.

Optionally, the NETCONF data comparison request further includes comparison object indication information, and before comparing the first configuration data with the second configuration data, the server determines the second configuration data from the one or more pieces of backup configuration data based on the comparison object indication information and the metadata corresponding to the one or more pieces of backup configuration data.

The comparison object indication information includes indication information indicating that a comparison object is the baseline configuration data. In this case, the server determines the second configuration data from the one or more pieces of backup configuration data based on the comparison object indication information and the baseline indication information in the metadata corresponding to the one or more pieces of backup configuration data, where the second configuration data is data in the baseline configuration data. That is, the client requests to compare configuration data to be delivered with data in the baseline configuration data. In this way, the server queries the baseline configuration data based on the baseline indication information in the metadata.

For example, the indication information that is included in the comparison object indication information and indicates that a comparison object is the baseline configuration data is 'golden', and the baseline indication information is a first value or a second value. The server queries the metadata corresponding to the one or more pieces of backup configuration data for baseline metadata whose baseline indication information is the first value, and queries, based on a baseline backup identifier in the baseline metadata, the one or more pieces of backup configuration data for backup configuration data corresponding to the baseline backup identifier, to obtain the baseline configuration data.

Alternatively, the comparison object indication information includes a second backup identifier. The server determines the second configuration data from the one or more pieces of backup configuration data based on the comparison object indication information and each backup identifier in the metadata corresponding to the one or more pieces of backup configuration data, where the second configuration data is data in backup configuration data corresponding to the second backup identifier. That is, the client requests to compare configuration data to be delivered with data in backup configuration data identified by a backup identifier. In this way, the server queries one piece of corresponding backup configuration data based on the backup identifier in the metadata.

For example, the second backup identifier included in the comparison object indication information is 'bak_1734860674', and the server queries the one or more pieces of backup configuration data for second backup configuration data corresponding to the second backup identifier, where the second configuration data is data in the second backup configuration data.

It should be noted that the backup configuration data in this embodiment of this application is a backup of configuration data in a running configuration datastore, the running configuration datastore includes one or more YANG modules, and each YANG module includes one or more data nodes. The configuration data to be delivered currently may correspond to a part of or all data in the running configuration datastore. Based on this, if the configuration data to be delivered currently corresponds to a part of data (for example, data in a data node) in the running configuration datastore, the client may request to compare the configuration data with a corresponding part of data in a piece of backup configuration data. In this case, the comparison object indication information further includes a filter, where the filter indicates the server to filter out the part of data from the backup configuration data. If the configuration data to be delivered currently corresponds to all data in the running configuration datastore, the client may request to compare the configuration data with all data in a piece of backup configuration data. In this case, the comparison object indication information does not include a filter. In short, a granularity of the data requested by the client for comparison may be a datastore granularity, a YANG module granularity, or a data node granularity.

In a case that the comparison object indication information includes the indication information indicating that a comparison object is the baseline configuration data, and the comparison object indication information does not include the filter, the baseline configuration data queried by the server based on the comparison object indication information is the second configuration data, and the server compares the first configuration data with the baseline configuration data. In a case in which the comparison object indication information includes the second backup identifier and the comparison object indication information does not include the filter, the second backup configuration data queried by the server based on the comparison object indication information is the second configuration data, and the server compares the first configuration data with the second backup configuration data.

In a case that the comparison object indication information further includes the filter, the server determines reference backup configuration data from the one or more pieces of backup configuration data, and then determines the second configuration data from the reference backup configuration data based on the filter. In a case that the comparison object indication information includes the indication information indicating that a comparison object is the baseline configuration data and the filter, the reference backup configuration data is the baseline configuration data, and the second configuration data is a part of data in the baseline configuration data. In a case that the comparison object indication information includes the second backup identifier and the filter, the reference backup configuration data is the second backup configuration data, and the second configuration data is a part of data in the second backup configuration data.

Optionally, the filter includes a filter identifier, and the filter identifier may be an identifier of a YANG module or a data node. The identifier of the YANG module or the data node is represented by a subtree or an xpath, that is, the filter is a subtree-filter or an xpath-filter. For example, the filter included in the comparison object indication information is <subtree>/users</subtree>, or the filter is an xpath expression such as '/users'.

Optionally, in this embodiment of this application, the NETCONF protocol is extended, so that the client can request, by using a NETCONF data comparison request, the server to compare configuration data. For example, a compare-config operation is defined to be used by the client to request to compare configuration data. The compare-config operation includes parameters <source> and <target>, and optionally, further includes subtree-filter or xpath-filter. The parameter <source> is used to carry configuration data to be delivered, that is, source configuration data. The parameter <target> is used to carry comparison object indication information, that is, indication information of a target comparison object, where the indication information may be golden or may be a backup identifier. In some embodiments, the comparison object indication information may alternatively be a name of a datastore, an identifier of an offline file, or an identifier of any piece of configuration data. In other words, the compare-config operation defined in this embodiment of this application may be used for comparison between any two pieces of configuration data, and is not limited to comparison with the baseline configuration data or other backup configuration data.

For example, the comparison object indication information includes the indication information indicating that a comparison object is the baseline configuration data and the filter, a NETCONF data comparison request sent by the client to the server includes the following information: The parameter < source> carries first configuration data to be delivered, that is, source configuration data. It can be seen that the source configuration data is configuration of two users in a data node /users, where one name (name) of the two users is root, and the other name is fred. The parameter <target> carries 'golden', indicating that the comparison object is data in the baseline configuration data. The parameter <subtree-filter> carries '/users', indicating that comparison is performed with configuration data in the node /users (also referred to as a subtree) in the baseline configuration data.

```
          <rpc message-id="101"
                 xmlns="urn:ietf:params:xml:ns:netconf:base:1.0">
               <compare-config>
                 <source>
                    <users>
                        <user>
                          <name>root</name>
                          <type>superuser</type>
                          <full-name>Charlie Root</full-name>
                          <company-info>
                            <dept>1</dept>
                            <id>1</id>
                          </company-info>
                        </user>
                        <user>
                          <name>fred</name>
                          <type>admin</type>
                          <company-info>
                            <dept>2</dept>
                            <id>2</id>
                          </company-info>
                        </user>
                      </users>
                 </source>
                 <target>golden</target>
                 <subtree-filter>
                   /users
                 </subtree-filter>
               </compare-config>
          </rpc>
```

In this embodiment of this application, after receiving the NETCONF data comparison request sent by the client, the server compares the first configuration data with the second configuration data to obtain a first comparison result, and sends the first comparison result to the client. The first comparison result includes a differential part between the first configuration data and the second configuration data.

For example, the server sends a comparison result response to the client, where the comparison result response includes the first comparison result. For example, the comparison result response includes the following information: The comparison result response includes a parameter <differences>, and the parameter <differences> is used to carry the first comparison result. The parameter <differences> includes a parameter <edit>, and the parameter <edit> carries the differential part. Optionally, the parameter <edit> further carries configuration adjustment guidance information. In this example, there are two differences between the first configuration data (that is, the source configuration data) and the second configuration data (that is, the target configuration data). The first difference is identified by a value 1 of <edit-id>, and the configuration adjustment guidance information carried in <operation> is 'replace', indicating that for the first difference, it is advised to perform replacement. An xpath expression of a replaced object is '/users/user[name=root]/full-name'. Specifically, it is advised to replace a value 'Charlia Root' of a full-name of the object in the first configuration data with 'Charlie Root'. The second difference is identified by a value 2 of <edit-id>, and the configuration adjustment guidance information carried in <operation> is 'create', indicating that for the second difference, it is advised to perform creation. An xpath expression of a created object is '/users/user[name=fred]/full-name'. It is advised to create a full-name with a value of 'Fred Flintstone' for a user named fred.

```
          <rpc-reply
                  xmls="urn:ietf:params:xml:ns:netconf:base:1.0"
                  message-id="101">
               <differences
                  xmlns="urn:ietf:params:xml:ns:yang:ietf-nmda-compare"
                  xmlns:or="urn:ietf:params:xml:ns:yang:ietf-origin">
                 <yang-patch>
                   <patch-id>user result</patch-id>
                   <comment>
                      diff between source and golden(target)
                   </comment>
                   <edit>
                      <edit-id>1</edit-id>
                      <operation>replace</operation>
                      <target>/users/user[name=root]/full-name</target>
                      <value>
                        <full-name>Charlia Root</full-name>
                      </value>
                      <source-value>
                         <full-name>Charlie Root</full-name>
                      </source-value>
                   </edit>
                   <edit>
                      <edit-id>2</edit-id>
                      <operation>create</operation>
                      <target>/users/user[name=fred]/full-name</target>
                      <value>
                        <full-name>Fred Flintstone</full-name>
                      </value>
                   </edit>
                 </yang-patch>
               </differences>
          </rpc-reply>
```

It should be noted that a specific form of the comparison result response described in the foregoing example is merely used as an example for describing how the server feeds back the first comparison result to the client in this embodiment of this application, and is not intended to limit this embodiment of this application. The server may alternatively feed back the first comparison result to the client in another form.

Optionally, in this embodiment of this application, the RESTCONF protocol may be extended, so that the client can request, by using a RESTCONF data comparison request, the server to perform configuration comparison. A specific implementation of performing configuration comparison based on the RESTCONF protocol is similar to the principle of the compare-config operation in the implementation of performing configuration comparison based on the NETCONF protocol, and details are not described herein again.

In this embodiment of this application, after receiving the first comparison result, the client generates a NETCONF configuration update request (referred to as a configuration update request for short) based on the first comparison result and the first configuration data. The client sends a NETCONF configuration update request to the server, to indicate the server to perform configuration updating based on the NETCONF configuration update request. For example, in a case that the first comparison result includes the differential part, and the differential part causes a network fault, the client adjusts the first configuration data based on the differential part, and generates and delivers the configuration update request based on the adjusted first configuration data. For another example, in a case that the first comparison result indicates that the differential part is included, but the differential part does not cause a network fault, the client does not adjust the first configuration data, and generates and delivers the configuration update request based on the first configuration data. For another example, in a case that the first comparison result does not include the differential part, the client does not adjust the first configuration data, and generates and delivers the configuration update request based on the first configuration data, or the client cancels the configuration update request.

After receiving the first comparison result, the client displays the first comparison result, and an administrator chooses, based on the displayed first comparison result, to adjust the first configuration data, or chooses not to adjust the first configuration data.

For example, the foregoing example is still used for description. For the first difference in the two differences in the foregoing example, the client modifies 'Charlia Root' to 'Charlie Root'. For the second difference, the client adds a full-name with a value of 'Fred Flintstone' to the user named fred. The configuration update request generated by the client based on the adjusted first configuration data carries the following information: An operation indication information included in the configuration update request indicates the server to perform an edit-config operation on the running (running) configuration datastore. A bold part in the parameter <edit-config> is a part adjusted based on the first comparison result.

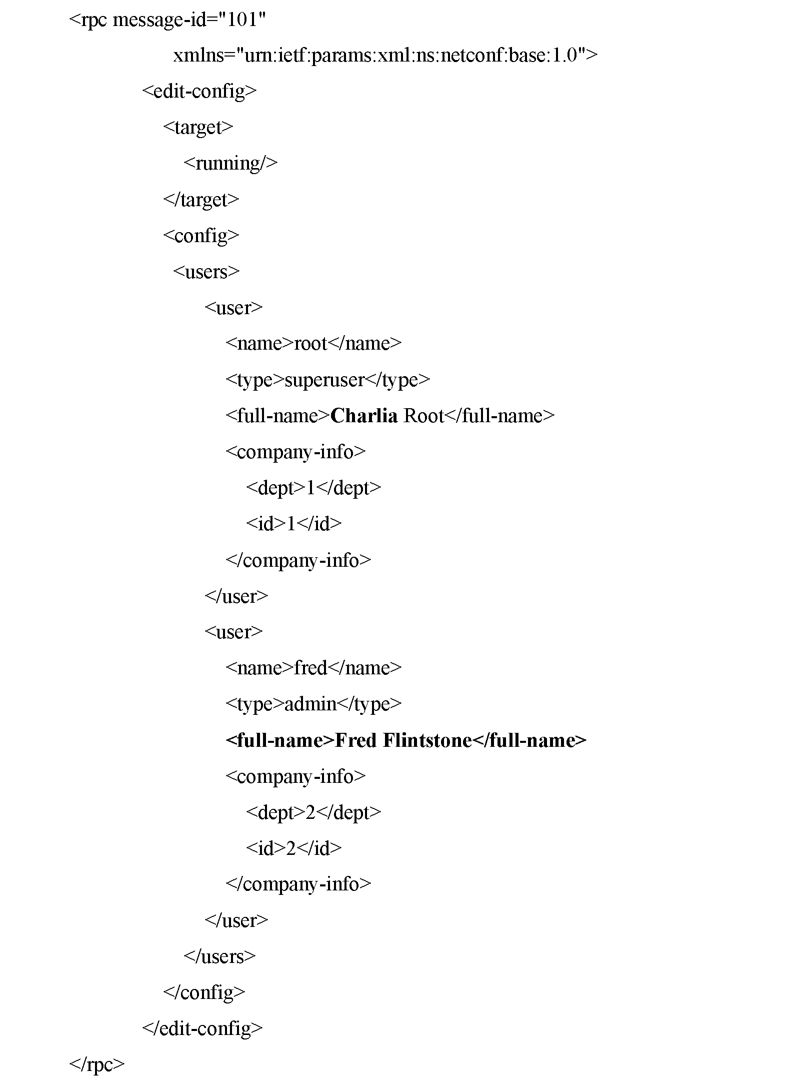

After receiving the configuration update request sent by the client, the server performs configuration updating on the configuration data in the running configuration datastore. Optionally, after the configuration updating, the server sends a configuration success response to the client. For example, the configuration success response includes the following information: <ok/> indicates that the configuration updating succeeds.

```
          <rpc-reply message-id="101"
                 xmlns="urn:ietf:params:xml:ns:netconf:base:1.0">
            <ok/>
          </rpc-reply>
```

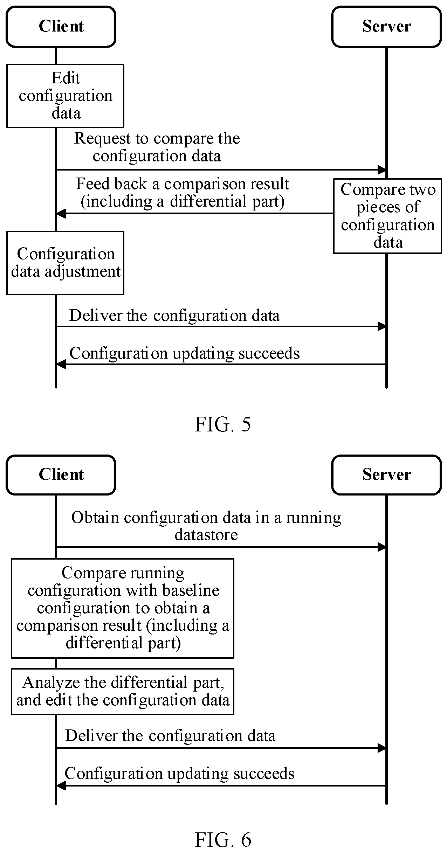

FIG. 5 is a flowchart of a configuration updating method according to an embodiment of this application. Refer to FIG. 5. A client edits configuration data at a local end, that is, edits first configuration data to be delivered. After the editing is completed, the client sends a NETCONF data comparison request to a server, to request to compare the first configuration data with another piece of configuration data. After receiving the data comparison request, the server compares the two pieces of configuration data to obtain a comparison result, where the comparison result includes a differential part between the two pieces of configuration data. After receiving the comparison result, the client performs configuration data adjustment based on the comparison result, for example, modifies the first configuration data based on the differential part. The client sends a configuration update request to the server based on the adjusted first configuration data, to deliver the adjusted first configuration data to the server. After receiving the configuration update request, the server performs configuration updating, and sends a configuration success response to the client, where the configuration success response indicates that the configuration updating succeeds.

It should be noted that, if the server supports a function of performing automatic backup after the configuration updating, after performing configuration updating on configuration data in a running configuration datastore, the server backs up the configuration data in the running configuration datastore after the configuration updating, to generate one piece of backup configuration data.

The foregoing description shows that the client requests the server to perform data comparison before delivering the configuration data. In some embodiments, the client may alternatively perform data comparison at the local end. For example, the client obtains second configuration data in one or more pieces of backup configuration data generated by the server, and compares the first configuration data with the second configuration data to obtain a first comparison result. Optionally, the client obtains the second configuration data in the one or more pieces of backup configuration data by using a <get-data> operation or a <get-config> operation in a NETCONF. Alternatively, if the client stores the one or more pieces of backup configuration data synchronized by the server to the client, the client obtains the second configuration data from the stored one or more pieces of backup configuration data.

In this embodiment of this application, baseline configuration data is configuration data that can enable the server to run normally, and a part that is in the running configuration datastore and that is greatly different from the baseline configuration data is likely to cause a network fault. Based on this, the baseline configuration data backed up on the server can be further used for fault locating (that is, troubleshooting), configuration check, or the like, which is described below.

Fault locating enables O&M personnel to quickly identify a root cause of a network fault caused by an abnormal running state of the server. In this embodiment of this application, non-compliant configuration on the server is found through comparison with the baseline configuration data, to quickly identify a network fault caused by improper configuration. To quickly locate a fault, in a case that a network fault occurs, the client obtains the configuration data in the running configuration datastore, and compares the configuration data in the running configuration datastore with the baseline configuration data, to obtain a second comparison result. The second comparison result includes a differential part between the configuration data in the running configuration datastore and the baseline configuration data. An administrator can find, by using the second comparison result, whether a network fault may be caused by improper configuration. It should be noted that, in another time period in which no network fault occurs, the client may also compare the configuration data in the running configuration datastore with the baseline configuration data, to check for possible improper configuration. Optionally, the client generates a configuration update request based on the second comparison result, and sends the configuration update request to the server, to indicate the server to update the configuration data in the running configuration datastore, thereby reducing improper configuration.

FIG. 6 is a flowchart of still another configuration management method according to an embodiment of this application. Refer to FIG. 6. A client obtains configuration data in a running configuration datastore, and compares the configuration data in the running configuration datastore with baseline configuration data to obtain a second comparison result. That is, the client compares running configuration with baseline configuration to obtain a comparison result, where the comparison result includes a differential part between the running configuration and the baseline configuration. Optionally, the client analyzes the differential part, edits the configuration data at a local end, and delivers the edited configuration data to a server. The server feeds back to the client that configuration updating succeeds.

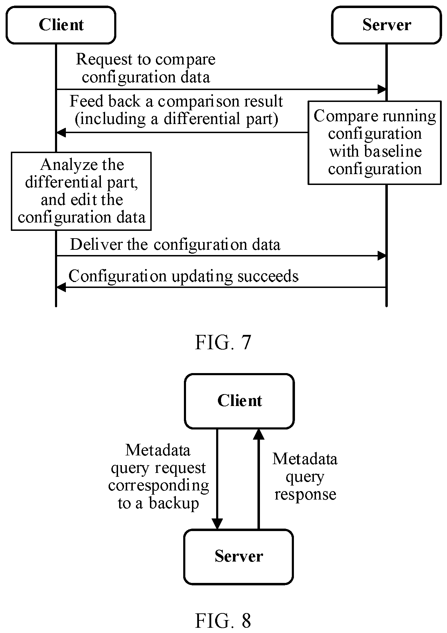

In some embodiments, as shown in FIG. 7, the client may also send a NETCONF data comparison request to the server, to request the server to compare the configuration data in the running configuration datastore with baseline configuration data. The server compares the configuration data in the running configuration datastore with the baseline configuration data to obtain the second comparison result. The server sends the second comparison result to the client. The client analyzes the differential part in the second comparison result, edits the configuration data at the local end, and delivers the edited configuration data to the server. The server feeds back to the client that configuration updating succeeds.

The compare-config operation described above is used as an example. The NETCONF data comparison request sent by the client to the server includes the following information. The NETCONF data comparison request indicates the server to compare the configuration data in the running configuration datastore with the baseline configuration data. The NETCONF data comparison request includes a parameter <compare-config>, <source> in the parameter <compare-config> carries a name of the running configuration datastore, that is, 'running', and <target> carries indication information indicating that a comparison object is the baseline configuration data, that is, 'golden'.

```
          <rpc message-id="101"
             xmlns="urn:ietf:params:xml:ns:netconf:base:1.0">
           <compare-config
               xmlns:ds="um:ietf:params:xml:ns:yang:ietf-datastores">
             <source>ds: running</source>
             <target>golden</target>
           </compare>
          </rpc>
```

Optionally, the NETCONF data comparison request sent by the client to the server may also include the following information. Compared with the previous example, a filter is added in this example. The filter xpath-filter indicates to compare configuration data of node interfaces in the running configuration datastore with configuration data of the node in the baseline configuration data.

```
          <rpc message-id="101"
             xmlns="urn:ietf:params:xml:ns:netconf:base:1.0">
           <compare-config
               xmlns:ds="um:ietf:params:xml:ns:yang:ietf-datastores">
             <source>ds: running</source>
             <target>golden</target>
             <xpath-filter
                  xmlns:if="urn:ietf:params:xml:ns:yang:ietf-interfaces">
               /if:interfaces
             </xpath-filter>
           </compare>
          </rpc>
```

Optionally, after comparing the configuration data in the running configuration datastore with the baseline configuration data to obtain the second comparison result, the server sends a comparison result response to the client, where the comparison response result includes the second comparison result. For example, the comparison result response sent by the server includes the following information. A parameter <differences> carries the second comparison result. It can be learned that, there are two differences between the configuration data in the running configuration datastore and the baseline configuration data. The first difference is identified by a value 1 of <edit-id >, and a value of <operation> is 'replace', indicating that for the first difference, it is advised to perform replacement. An xpath expression of an object that is advised to be replaced is '/ietf-interfaces:interface=eth0/enabled'. It is advised to replace a value 'false' of the object in the running configuration datastore with 'true'. The first difference indicates that an interface named eth0 in the running configuration datastore is not enabled. The second difference is identified by a value 2 of <edit-id > and a value of <operation> is 'create', indicating that for the second difference, it is advised to perform creation. An xpath expression of a created object is '/ietf-interfaces:interface=eth0/description', and a created value is 'ip interface'. The second difference indicates that the interface named eth0 in the running configuration datastore lacks of description (description) information.

```
          <rpc-reply
              xmlns= "urn:ietf:params:xml: ns:netconf:base: 1.0"
              message-id="101">
           <differences
              xmlns:or="um:ietf:params:xml:ns:yang:ietf-origin">
             <yang-patch>
                <patch-id>interface status</patch-id>
                <comment>
                  diff between ds:running (source) and golden (target)
                </comment>
                <edit>
                   <edit-id>1</edit-id>
                   <operation>replace</operation>
                   <target>/ietf-interfaces:interface=eth0/enabled</target>
                   <value>
                      <if:enabled>true<if:enabled>
                   </value>
                   <source-value>
                        <if:enabled>false</if:enabled>
                   </source-value>
                </edit>
                <edit>
                   <edit-id>2</edit-id>
                   <operation>create</operation>
                   <target>/ietf-interfaces:interface=eth0/description</target>
                   <value>
                      <if: description>ip interface<description>
                   </value>
                 </edit>
              </yang-patch>
           </differences>
          </rpc-reply>
```

It is assumed that the foregoing example is the second comparison result obtained by the client when a packet loss occurs on the server. Based on the second comparison result shown in the foregoing example, it can be inferred that the packet loss on the server may be caused by the disabled eth0 interface. Therefore, the client may deliver, to the server, a configuration update request used for enabling the eth0 interface, and the configuration update request may be further used for adding description information to the eth0 interface. That is, after obtaining the second comparison result, the client generates a configuration update request based on the second comparison result, and sends the configuration update request to the server to update the configuration data in the running configuration datastore. For example, the configuration update request sent by the client to the server includes the following information. The configuration update request requests the server to perform an edit-config operation on the running configuration datastore, and a bold part in a parameter <edit-config> is configuration data to be delivered that is determined based on the second comparison result.

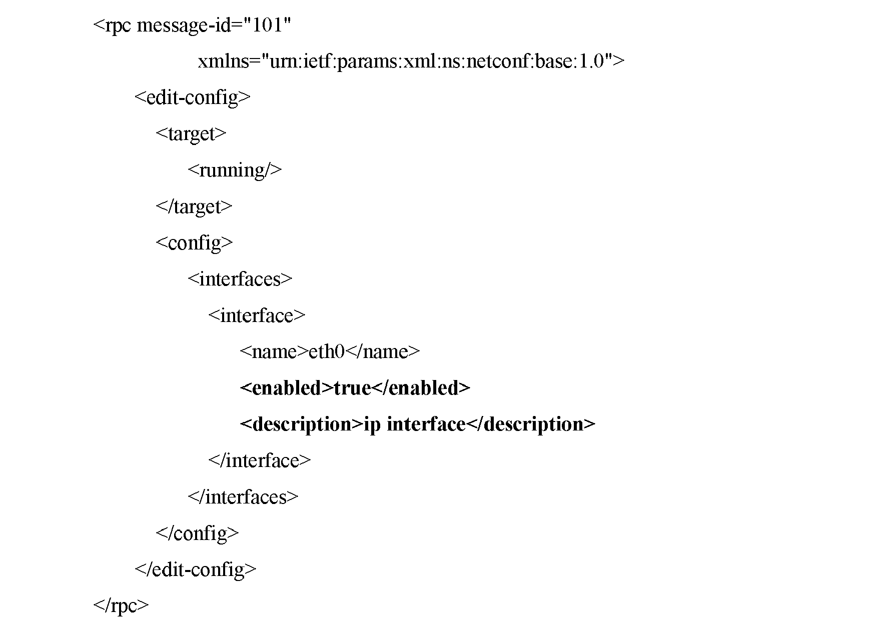

In addition to the content described above, this embodiment of this application further supports query and/or deletion of backup configuration data generated by the server. This case is described in the following.

First, an implementation process of backup deletion is described. It should be noted that there are many implementations of performing backup deletion by the server. These implementations may be used independently or in combination. This is not limited in this embodiment of this application.

In an implementation, the client sends a first NETCONF backup deletion request (referred to as a first backup deletion request for short) to the server, where the first backup deletion request includes a third backup identifier, and the first backup deletion request indicates the server to delete third backup configuration data corresponding to the third backup identifier from one or more pieces of backup configuration data. The server receives the first NETCONF backup deletion request, and deletes the third backup configuration data corresponding to the third backup identifier from the one or more pieces of backup configuration data. The third backup identifier may be a backup name, a backup label, a backup time, or the like that can uniquely identify one piece of backup configuration data. That is, the client specifies to delete one piece of backup configuration data identified by a backup identifier.

In another implementation, the client sends a second NETCONF backup deletion request (referred to as a second backup deletion request for short) to the server, where the second backup deletion request includes a first backup label, and the second backup deletion request indicates the server to delete all backup configuration data corresponding to the first backup label from one or more pieces of backup configuration data. The server receives the second NETCONF backup deletion request, and deletes all the backup configuration data corresponding to the first backup label from the one or more pieces of backup configuration data. The first backup label corresponds to at least one piece of backup configuration data. That is, the client requests to delete all backup configuration data identified by a backup label in batches.

In still another implementation, the client sends a third NETCONF backup deletion request (referred to as a third backup deletion request for short) to the server, where the third backup deletion request includes a first creator, and the third backup deletion request indicates the server to delete all backup configuration data created by the first creator from one or more pieces of backup configuration data. The server receives the third NETCONF backup deletion request, and deletes all the backup configuration data created by the first creator from the one or more pieces of backup configuration data. The first creator creates at least one piece of backup configuration data, and the first creator may be a client (admin) or a server (system). That is, the client requests to delete all backup configuration data created by a creator in batches.

In still another implementation, the server automatically deletes backup configuration data generated before a specified duration. For example, the server deletes backup configuration data generated two months ago every month.

In still another implementation, the server reserves recently generated backup configuration data whose quantity does not exceed a specified backup quantity. After the specified backup data is reached, the server automatically deletes one earliest generated piece of backup configuration data each time the server generates one piece of backup configuration data. That is, the server automatically deletes the backup configuration data other than the specified backup data. For example, if the specified backup data is 100, the server reserves a maximum of 100 pieces of backup configuration data. After the quantity reaches 100, the server automatically deletes one earliest generated piece of backup configuration data each time the server generates one piece of backup configuration data.

Optionally, in this embodiment of this application, the NETCONF protocol is extended, so that the client can request, by using a NETCONF backup deletion request, the server to perform backup deletion. For example, a delete-snapshot operation is defined to be used by the client to request backup deletion. A parameter in the delete-snapshot operation includes indication information of a deleted object. For example, the parameter in the delete-snapshot operation includes the third backup identifier, indicating that the deleted object is the third backup configuration data.

For example, the NETCONF backup deletion request sent by the client to the server includes the following information. The NETCONF backup deletion request requests the server to delete backup configuration data whose backup name is 'admin_2021-09-26'.

```
          <rpc message-id=" 102"
                xmlns="um:ietf:params:xml:ns:netconf:base:1.0">
              <delete-snapshot>
                <snapshot-name> admin_2021-09-26</snapshot-name>
              </delete-snapshot>
          </rpc>
```

Optionally, after the backup deletion is performed, the server sends a backup deletion success response to the client. For example, the backup deletion success response sent by the server to the client includes the following information. <ok/> indicates that the backup deletion succeeds.

```
          <rpc-reply message-id="102"
                 xmlns="urn:ietf:params:xml:ns:netconf:base:1.0">
            <ok/>
          </rpc-reply>
```

Optionally, in this embodiment of this application, the RESTCONF protocol may alternatively be extended, so that the client can request, by using a RESTCONF backup deletion request, the server to perform backup deletion. A specific implementation of performing backup deletion based on the RESTCONF protocol is similar to the principle of the delete-snapshot operation in the implementation of performing backup deletion based on the NETCONF protocol, and details are not described herein again.

In this embodiment of this application, each time the server deletes one piece of backup configuration data, the server further deletes metadata corresponding to the deleted backup configuration data. That is, a quantity of pieces of backup configuration data stored on the server is a quantity of pieces of corresponding metadata.

The following describes an implementation process of backup query.

In this embodiment of this application, the client sends a first NETCONF backup configuration data query request (referred to as a first backup configuration data query request for short) to the server, where the first backup configuration data query request includes query target indication information, and the query target indication information indicates that a query target is the baseline configuration data. The server receives the first backup configuration data query request. The server queries the one or more pieces of backup configuration data for the baseline configuration data based on the query target indication information and the baseline indication information in the metadata corresponding to the one or more pieces of backup configuration data, to obtain a first query result. The server sends a first backup configuration data query response to the client, where the first backup configuration data query response includes the first query result. The client receives the first backup configuration data query response. That is, the client can request the server to query the baseline configuration data by using the baseline indication information. It should be noted that, if the server finds the baseline configuration data, the first query result includes data in the baseline configuration data. If the server does not find the baseline configuration data, the first query result indicates that the query fails. Optionally, the query target indication information further includes a filter, indicating that the client queries some data in the baseline configuration data by using the filter.

For example, assuming that a historical configuration datastore named versioned is defined in the NMDA architecture, and the one or more pieces of backup configuration data generated by the server are stored in the historical configuration datastore, the client can query the backup configuration data in the historical configuration datastore through a standard RPC operation supported by the NETCONF. For example, the client queries data in the versioned datastore through a get-data or get-config operation. Using the get-data operation as an example, the first backup configuration data query request sent by the client includes the following information. <get-data> includes parameters <datastore> and <target>, and the two parameters indicate that the query object is golden in versioned, that is, the query object is the baseline configuration data in the historical configuration datastore. The parameter <datastore> indicates that the historical configuration datastore is queried, and the parameter <target> indicates that the baseline configuration data is queried. <get-data> further includes a parameter <subtree>, and the parameter <subtree> carries filter information, indicating that the client requests to query configuration data in a subtree /top/users in the baseline configuration data.

```
          <rpc message-id="101"
              xmlns="urn:ietf:params:xml:ns:netconf:base:1.0">
           <get-data xmlns="um:ietf:params:xml:ns:yang:ietf-netconf-nmda"
                      xmlns:ds="um:ietf:params:xml:ns:yang:ietf-datastores">
             <datastore>ds:versioned</datastore>
             <target>golden</target>
             <subtree-filter>
              <top xmlns="http://example.com/schema/12/config">
                 <users/>
              </top>
             </subtree-filter>
           </get-data>
          </rpc>
```

In this embodiment of this application, the client can also query corresponding backup configuration data by using a backup identifier. For example, the client sends a second NETCONF backup configuration data query request (referred to as a second backup configuration data query request for short) to the server, where the second backup configuration data query request includes a fourth backup identifier. The server receives the second backup configuration data query request. The server queries the one or more pieces of backup configuration data for fourth backup configuration data corresponding to the fourth backup identifier, to obtain a second query result. The server sends a second backup configuration data query response to the client, where the second backup configuration data query response includes the second query result. The client receives the second backup configuration data query response. It should be noted that the fourth backup identifier may be a backup identifier corresponding to the baseline configuration data, or may be a backup identifier corresponding to other backup configuration data. In addition, if the server finds the fourth backup configuration data, the second query result includes data in the fourth backup configuration data. If the server does not find the fourth backup configuration data, the second query result indicates that the query fails. Optionally, the second backup configuration data query request further includes a filter, indicating that the client queries some data in a piece of backup configuration data by using the filter.

Optionally, the fourth backup identifier is a backup name, a backup time, or a backup label. In this embodiment of this application, in addition to querying one piece of backup configuration data based on the backup identifier, the client can also query backup configuration data in batches. For example, a backup configuration data query request sent by the client includes a specified creator, to request to query all backup configuration data created by the specified creator. For another example, a backup configuration data query request sent by the client includes a specified backup label, to request to query all backup configuration data corresponding to the specified backup label.

For example, a backup configuration data query request sent by the client includes the fourth backup identifier, and the fourth backup identifier is a backup name. Assuming that the one or more pieces of backup configuration data generated by the server are stored in a historical configuration datastore, the client queries backup configuration data corresponding to a backup identifier through a get-data operation. The second backup configuration data query request sent by the client to the server includes the following information. A difference from the foregoing example lies in that <get-data> does not include the parameter <target> but includes a parameter <snapshot-name>, where the parameter <snapshot-name> carries a backup name, the backup name is the fourth backup identifier, and indicates the client to request to query data in backup configuration data whose backup name is 'autosave- 309110912212204003'.

```
          <rpc message-id="101"
              xmlns="urn:ietf:params:xml:ns:netconf:base:1.0">
           <get-data xmlns="um:ietf:params:xml:ns:yang:ietf-netconf-nmda"
                    xmlns: ds= "urn: ietf:params :xml: ns :yang:ietf-datastores ">
             <datastore>ds:versioned</datastore>
             <snapshot-name>autosave-309110912212204003</snapshot-name>
             <subtree-filter>
               <top xmlns="http://example.com/schema/12/config">
                  <users/>
               </top>
             </subtree-filter>
           </get-data>
          </rpc>
```

The first backup configuration data query response or the second backup configuration data query response sent by the server to the client carries the following information. The parameter <data> carries the configuration data in the subtree /top/users in the queried backup configuration data.

```
          <rpc-reply message-id="101"
              xmlns="urn:ietf:params:xml:ns:netconf:base:1.0">
           <data xmlns="urn:ietf:params:xml:ns:yang:ietf-netconf-nmda">
             <top xmlns="http://example.com/schema/1.2/config">
               <users>
                 <user>
                   <name>root</name>
                   <type>superuser</type>
                   <full-name>Charlie Root</full-name>
                   <company-info>
                       <dept>1</dept>
                       <id>1</id>
                   </company-info>
                 </user>
                 <!-- additional <user> elements appear here... -->
               </users>
             </top>
           </data>
          </rpc-reply>
```

In addition to the content described above, this embodiment of this application further supports query and/or update of metadata corresponding to the backup configuration data. This case is described in the following.

First, an implementation process of metadata query is described. As shown in FIG. 8, a client sends a NETCONF metadata query request (referred to as a metadata query request for short) to a server. The server receives the metadata query request, and sends a metadata query response to the client. The metadata query response includes metadata corresponding to one or more pieces of backup configuration data backed up by the server. In this way, the client can know a quantity of pieces of backup configuration data existing in the server currently, can also know whether the backup configuration data includes baseline configuration data, and can also know a backup identifier and the like corresponding to each piece of backup configuration data, so that the client can correctly send a request to the server based on the backup identifier.

For example, as described in step 301, in this embodiment of this application, a YANG model used for storing metadata corresponding to the backup configuration data is defined. In this way, the client can query the metadata by performing an RPC operation of the NETCONF. In addition, assuming that the metadata is stored in an operational configuration datastore, the NETCONF metadata query request sent by the client to the server includes the following information. The metadata query request indicates to perform a get-data operation, and <get-data> includes parameters <datastore> and <subtree-filter>. The parameter <datastore> carries a name of the operational configuration datastore, and indicates to query data in the operational configuration datastore. The parameter <subtree-filter> indicates to query data in a subtree /versioned-snapshots/snapshot-archives, and the data stored in the subtree is metadata corresponding to the backup configuration data.

```
          <rpc message-id="101"
              xmlns="urn:ietf:params:xml:ns:netconf:base:1.0">
           <get-data xmlns="um:ietf:params:xml:ns:yang:ietf-netconf-nmda"
                    xmlns: ds= "urn: ietf:params :xml: ns :yang:ietf-datastores ">
             <datastore>ds:operational</datastore>
             <subtree-filter>
               <versioned-snapshots>
                 <snapshot-archives/>
               </versioned-snapshots>
             </subtree-filter>
           </get-data>
          </rpc>
```

The metadata query response sent by the server to the client includes the following information. The metadata query response indicates that the server stores two pieces of backup configuration data currently. A backup name of the first piece of backup configuration data is 'admin_2021-09-26', the first piece of backup configuration data is the baseline configuration data (Golden-config), a backup time is a system time corresponding to a timestamp '1632730960', a creator is admin (an administrator user or the client), a backup label is 'admin, rescue', and a backup description (description information) is 'This is used to revert current configuration when an error encountered'. A backup name of the second piece of backup configuration data is 'autosave-309110912212204003', the second backup configuration data is not the baseline configuration data, a backup time is a system time corresponding to a timestamp '1632731290', a creator is system (the server), a backup label is 'auto-save', and no backup description is provided.

```
          <rpc-reply message-id="101"
              xmlns="urn:ietf:params:xml:ns:netconf:base:1.0">
           <data xmlns="urn:ietf:params:xml:ns:yang:ietf-netconf-nmda">
             <versioned-snapshots>
               <snapshot-archives>
                 <snapshot-archive>
                    <name>admin_2021-09-26</name>
                    <is_golden>true</is_golden>
                    <creation-time>1632730960</creation-time>
                    <creator>admin</creator>
                    <label> admin, rescue</label>
                    <description> This is used to revert current configuration when an error
                    encountered</description>
                 </snapshot-archive>
                 <snapshot-archive>
                    <name>autosave-309110912212204003</name>
                    <is_golden>false</is_golden>
                    <creation-time>1632731290</creation-time>
                    <creator>system</creator>
                    <label>auto-save</label>
                 </snapshot-archive>
               </snapshot-archives>
             </versioned-snapshots>
           </data>
          </rpc-reply>
```

Optionally, in this embodiment of this application, the client may alternatively perform backup configuration data query and metadata query by using the RESTCONF protocol. A specific implementation of performing backup configuration data query and metadata query based on the RESTCONF protocol is similar to the principle of the implementation of performing backup configuration data query and metadata query based on the NETCONF protocol, and details are not described herein again.

The following describes an implementation process of metadata update.

In this embodiment of this application, the baseline configuration data can be updated by updating the baseline indication information in the metadata. For example, the client sends a NETCONF metadata update request (referred to as metadata update request for short) to the server, where the metadata update request includes baseline configuration data update indication information, and the metadata update request indicates the server to update baseline indication information in metadata corresponding to one piece of backup configuration data indicated by the baseline configuration data update indication information. The server receives the metadata update request, and updates the baseline indication information in the metadata corresponding to the one piece of backup configuration data indicated by the baseline configuration data update indication information.

For example, assuming that the baseline indication information corresponding to the baseline configuration data is a first value, if the baseline configuration data update indication information indicates to update the baseline indication information corresponding to the baseline configuration data, the server updates the baseline indication information corresponding to the baseline configuration data from the first value to a second value, for example, modifies '1' to '0', or modifies 'true' to 'false'. In this way, the previous baseline configuration data is no longer the baseline configuration data after the metadata is updated.

If the baseline configuration data update indication information includes a fifth backup identifier and indicates to update baseline indication information corresponding to fifth backup configuration data corresponding to the fifth backup identifier, and the fifth backup configuration data is not the baseline configuration data, the server updates the baseline indication information corresponding to the fifth backup identifier from the second value to the first value, for example, modifies '0' to '1', or modifies 'false' to 'true'. In this way, the fifth backup configuration data is used as the baseline configuration data after the metadata is updated. It should be noted that, to ensure that the baseline configuration data is unique, if one piece of backup configuration data is the baseline configuration data before the metadata is updated, after the metadata is updated, the server further updates baseline indication information corresponding to the previous baseline configuration data by default, so that the previous baseline configuration data is no longer used as the baseline configuration data after the metadata is updated. If no baseline configuration data exists before the metadata is updated, the server does not need to update baseline indication information corresponding to backup configuration data other than the fifth backup configuration data.

In conclusion, in embodiments of this application, the backup configuration data generated by the server can be used for configuration rollback. In this way, an administrator can quickly restore the server to an expected state without performing a plurality of configuration operations. In addition, the backup configuration data corresponds to metadata, and the metadata includes baseline indication information and a backup identifier, where the baseline indication information indicates whether the corresponding backup configuration data is baseline configuration data. In this way, when configuration rollback is performed based on the metadata, in one case, it can be specified to roll back to the baseline configuration data. In addition, the metadata is structured data and has a unified view. The metadata can be used to perform flexible management on the backup configuration data, thereby reducing management difficulty.

In addition, the baseline configuration data in this embodiment of this application can be used for baseline reference and guidance before configuration delivery, and can be further used to quickly identify a configuration change and non-compliant configuration, to quickly identify a network fault caused by a network configuration change and quickly locate a root cause of the fault. In this solution, there is no need to manually compare historical configuration with current running configuration, which effectively improves the comparison efficiency. The metadata in this solution can be used to perform unified and flexible management on backup configuration data, for example, adding, viewing, and deleting on configuration backup data. The client can query and delete the backup configuration data in batches based on the metadata. This solution provides historical configuration (including baseline configuration) for fault backtracking. For example, a historical configuration datastore is introduced to store backup configuration data, and the backup configuration data is used for rollback or restoration when the server encounters a fault. In this way, fault self-recovery can be implemented in some scenarios.

This solution further defines and extends a series of RPC operations related to the backup configuration data based on the NETCONF protocol. For example, a get-data operation is extended to support the client to query the backup configuration data in the historical datastore. A create-snapshot operation is added to support the client to create a backup. In addition, the create-snapshot operation supports the client to specify and create one piece of backup configuration data as baseline configuration data. A recover-snapshot operation is added to support the client to perform configuration rollback. A delete-snapshot operation is added to support the client to perform backup deletion. A compare-config operation is defined to support comparison between any two pieces of configuration data. In addition, this solution further defines a YANG model for modeling backup configuration data, that is, storing metadata. The YANG model supports the client to quickly view information of the backup configuration data, such as a creator, a backup time, whether the backup configuration data is baseline configuration, a backup label, and a backup description.

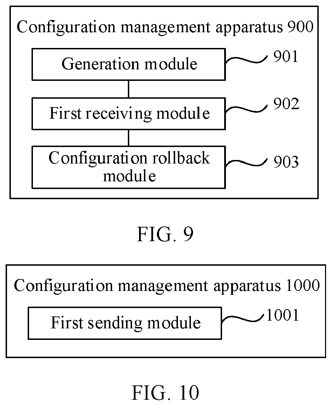

FIG. 9 is a schematic diagram of a structure of a configuration management apparatus 900 according to an embodiment of this application. The configuration management apparatus 900 may be implemented as a part or all of a server by using software, hardware, or a combination thereof. The server may be any server in the embodiments in FIG. 1 to FIG. 8. Refer to FIG. 9. The apparatus 900 is used in a server, and the apparatus 900 includes a generation module 901, a first receiving module 902, and a configuration rollback module 903.

The generation module 901 is configured to generate one or more pieces of backup configuration data, where each piece of backup configuration data corresponds to metadata, the metadata includes baseline indication information and a backup identifier, and the baseline indication information indicates whether the corresponding backup configuration data is baseline configuration data.

The first receiving module 902 is configured to receive a NETCONF configuration rollback request sent by a client.

The configuration rollback module 903 is configured to perform configuration rollback based on metadata corresponding to the one or more pieces of backup configuration data and the NETCONF configuration rollback request.

Optionally, the NETCONF configuration rollback request includes rollback target indication information, and the rollback target indication information indicates to roll back to the baseline configuration data; and
the configuration rollback module 903 includes:
a first determining submodule, configured to determine the baseline configuration data from the one or more pieces of backup configuration data based on the rollback target indication information and baseline indication information in the metadata corresponding to the one or more pieces of backup configuration data; and
a first rollback submodule, configured to roll back configuration data in a running configuration datastore to the baseline configuration data.

Optionally, the NETCONF configuration rollback request includes rollback target indication information, the rollback target indication information indicates to roll back to first backup configuration data, and metadata corresponding to the first backup configuration data includes a first backup identifier; and
the configuration rollback module 903 includes:
a second determining submodule, configured to determine the first backup configuration data corresponding to the first backup identifier from the one or more pieces of backup configuration data; and
a second rollback submodule, configured to roll back configuration data in a running configuration datastore to the first backup configuration data.

Optionally, the generation module 901 includes:
a first generation submodule, configured to generate, each time a NETCONF backup creation request is received, one piece of backup configuration data based on the NETCONF backup creation request; and/or
a second generation submodule, configured to generate at least one piece of backup configuration data based on a preset time; and/or
a third generation submodule, configured to generate, each time configuration updating is performed, one piece of backup configuration data based on configuration data after the configuration updating.

Optionally, in a case that the first generation submodule receives a NETCONF backup creation request, if the NETCONF backup creation request includes baseline configuration data indication information, baseline indication information in metadata corresponding to the generated one piece of backup configuration data is the baseline configuration data indication information, where the baseline configuration data indication information includes a first value or a second value, the first value indicates that the corresponding backup configuration data is the baseline configuration data, and the second value indicates that the corresponding backup configuration data is not the baseline configuration data.

Optionally, the apparatus 900 further includes:
a second receiving module, configured to receive a NETCONF data comparison request sent by the client, where the NETCONF data comparison request includes first configuration data to be delivered;
a comparison module, configured to compare the first configuration data with second configuration data to obtain a first comparison result, where the first comparison result includes a differential part between the first configuration data and the second configuration data, and the second configuration data is data in the one or more pieces of backup configuration data; and
a first sending module, configured to send the first comparison result to the client.

Optionally, the NETCONF data comparison request further includes comparison object indication information; and
the apparatus 900 further includes:
a determining module, configured to determine the second configuration data from the one or more pieces of backup configuration data based on the comparison object indication information and the metadata corresponding to the one or more pieces of backup configuration data.

Optionally, the comparison object indication information includes indication information indicating that a comparison object is the baseline configuration data; and
the determining module includes:
a third determining submodule, configured to determine the second configuration data from the one or more pieces of backup configuration data based on the comparison object indication information and the baseline indication information in the metadata corresponding to the one or more pieces of backup configuration data, where the second configuration data is data in the baseline configuration data.

Optionally, the comparison object indication information includes a second backup identifier; and
the determining module includes:
a third determining submodule, configured to determine the second configuration data from the one or more pieces of backup configuration data based on the comparison object indication information and each backup identifier in the metadata corresponding to the one or more pieces of backup configuration data, where the second configuration data is data in backup configuration data corresponding to the second backup identifier.

Optionally, the comparison object indication information further includes a filter; and
the third determining submodule is configured to:
determine reference backup configuration data from the one or more pieces of backup configuration data; and
determine the second configuration data from the reference backup configuration data based on the filter.

Optionally, the apparatus 900 further includes:
a third receiving module, configured to receive a first NETCONF backup deletion request, where the first NETCONF backup deletion request includes a third backup identifier; and
a backup deletion module, configured to delete third backup configuration data corresponding to the third backup identifier from the one or more pieces of backup configuration data.

Optionally, the apparatus 900 further includes:
a fourth receiving module, configured to receive a NETCONF metadata update request, where the NETCONF metadata update request includes baseline configuration data update indication information; and
a metadata updating module, configured to update baseline indication information in metadata corresponding to one piece of backup configuration data indicated by the baseline configuration data update indication information.

Optionally, the apparatus 900 further includes:
a fifth receiving module, configured to receive a first NETCONF backup configuration data query request, where the first NETCONF backup configuration data query request includes query target indication information, and the query target indication information indicates that a query target is the baseline configuration data;
a query module, configured to query the one or more pieces of backup configuration data for the baseline configuration data based on the query target indication information and the baseline indication information in the metadata corresponding to the one or more pieces of backup configuration data, to obtain a first query result; and
a second sending module, configured to send a first backup configuration data query response, where the first backup configuration data query response includes the first query result.

Optionally, the one or more pieces of backup configuration data include a backup of the configuration data in the running configuration datastore.

In embodiments of this application, the backup configuration data generated by the server can be used for configuration rollback. In this way, an administrator can quickly restore the server to an expected state without performing a plurality of configuration operations. In addition, the backup configuration data corresponds to metadata, and the metadata includes baseline indication information and a backup identifier, where the baseline indication information indicates whether the corresponding backup configuration data is baseline configuration data. In this way, when configuration rollback is performed based on the metadata, in one case, it can be specified to roll back to the baseline configuration data. In addition, the metadata is structured data and has a unified view. The metadata can be used to perform flexible unified management on the backup configuration data, thereby reducing management difficulty.

It should be noted that, during configuration management of the configuration management apparatus provided in the foregoing embodiment, division of the foregoing functional modules is merely used as an example for description. In an actual application, the foregoing functions may be allocated to and completed by different functional modules based on a requirement, that is, an internal structure of the apparatus is divided into different functional modules, to implement all or some of the functions described above. In addition, the configuration management apparatus provided in the foregoing embodiments and the configuration management method embodiments belong to a same concept. For a specific implementation process, refer to the method embodiments. Details are not described herein again.

FIG. 10 is a schematic diagram of a structure of a configuration management apparatus 1000 according to an embodiment of this application. The configuration management apparatus 1000 may be implemented as a part or all of a client by using software, hardware, or a combination thereof. The client may be any client in the embodiments in FIG. 1 to FIG. 8. The apparatus 1000 is used in a client. Refer to FIG. 10.The apparatus 1000 includes a first sending module 1001.

The first sending module 1001 is configured to send a NETCONF configuration rollback request to a server, to indicate the server to perform configuration rollback based on the NETCONF configuration rollback request and metadata corresponding to one or more pieces of backup configuration data, where the one or more pieces of backup configuration data are generated by the server, each piece of backup configuration data corresponds to metadata, the metadata includes baseline indication information and a backup identifier, and the baseline indication information indicates whether the corresponding backup configuration data is baseline configuration data.

Optionally, the apparatus 1000 further includes:
a second sending module, configured to send a NETCONF backup creation request to the server, to indicate the server to generate one piece of backup configuration data based on the NETCONF backup creation request.

Optionally, the apparatus 1000 further includes:
a third sending module, configured to send a NETCONF data comparison request to the server, where the NETCONF data comparison request includes first configuration data to be delivered, the NETCONF data comparison request indicates the server to compare the first configuration data with second configuration data, and the second configuration data is data in the one or more pieces of backup configuration data; and
a first receiving module, configured to receive a first comparison result sent by the server, where the first comparison result includes a differential part between the first configuration data and the second configuration data.

Optionally, the apparatus 1000 further includes:
a generation module, configured to generate a NETCONF configuration update request based on the first comparison result and the first configuration data; and
a fourth sending module, configured to send the NETCONF configuration update request to the server, to indicate the server to perform configuration updating based on the NETCONF configuration update request.

Optionally, the apparatus 1000 further includes:
an obtaining module, configured to obtain configuration data in a running configuration datastore; and
a comparison module, configured to compare the configuration data in the running configuration datastore with the baseline configuration data to obtain a second comparison result.

Optionally, the apparatus 1000 further includes:
a fifth sending module, configured to send a first NETCONF backup deletion request to the server, where the first NETCONF backup deletion request includes a third backup identifier, and the first NETCONF backup deletion request indicates the server to delete third backup configuration data corresponding to the third backup identifier from the one or more pieces of backup configuration data.

Optionally, the apparatus 1000 further includes:
a sixth sending module, configured to send a NETCONF metadata update request to the server, where the NETCONF metadata update request includes baseline configuration data update indication information, and the NETCONF metadata update request indicates the server to update baseline indication information in metadata corresponding to one piece of backup configuration data indicated by the baseline configuration data update indication information.

Optionally, the apparatus 1000 further includes:
a seventh sending module, configured to send a first NETCONF backup configuration data query request to the server, where the first NETCONF backup configuration data query request includes query target indication information, and the query target indication information indicates that a query target is the baseline configuration data; and
a second receiving module, configured to receive a first backup configuration data query response sent by the server, where the first backup configuration data query response includes a first query result, and the first query result is obtained after the server queries the one or more pieces of backup configuration data for the baseline configuration data based on the query target indication information and baseline indication information in the metadata corresponding to the one or more pieces of configuration data.

In embodiments of this application, backup configuration data generated by a server can be used for configuration rollback. In this way, an administrator can quickly restore the server to an expected state without performing a plurality of configuration operations. In addition, the backup configuration data corresponds to metadata, and the metadata includes baseline indication information and a backup identifier, where the baseline indication information indicates whether the corresponding backup configuration data is baseline configuration data. In this way, when configuration rollback is performed based on the metadata, in one case, it can be specified to roll back to the baseline configuration data. In addition, the metadata is structured data and has a unified view. The metadata can be used to perform flexible unified management on the backup configuration data, thereby reducing management difficulty.

It should be noted that, during configuration management of the configuration management apparatus provided in the foregoing embodiment, division of the foregoing functional modules is merely used as an example for description. In an actual application, the foregoing functions may be allocated to and completed by different functional modules based on a requirement, that is, an internal structure of the apparatus is divided into different functional modules, to implement all or some of the functions described above. In addition, the configuration management apparatus provided in the foregoing embodiments and the configuration management method embodiments belong to a same concept. For a specific implementation process, refer to the method embodiments. Details are not described herein again.

All or a part of the foregoing embodiments may be implemented by software, hardware, firmware, or any combination thereof. When software is used to implement the embodiments, all or a part of the embodiments may be implemented in a form of a computer program product. The computer program product includes one or more computer instructions. When the computer instructions are loaded and executed on a computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from one computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a digital versatile disc (digital versatile disc, DVD)), a semiconductor medium (for example, a solid-state drive (solid-state drive, SSD)), or the like. It should be noted that, the computer-readable storage medium mentioned in this embodiment of this application may be a non-volatile storage medium, or in other words, may be a non-transitory storage medium.

It should be understood that "at least one" mentioned in this specification means one or more, and "a plurality of" means two or more. In the descriptions of embodiments of this application, unless otherwise specified, "/" means "or". For example, A/B may represent A or B. In this specification, "and/or" describes only an association relationship between associated objects and represents that three relationships may exist. For example, A and/or B may represent the following three cases: Only A exists, both A and B exist, and only B exists. In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

It should be noted that, information (including but not limited to user equipment information and user personal information), data (including but not limited to data used for analysis, stored data, and displayed data), and signals in embodiments of this application are authorized by the user or fully authorized by all parties, and collection, use, and processing of related data need to comply with related laws, regulations, and standards of related countries and regions. For example, the configuration data in embodiments of this application is obtained when sufficient authorization is obtained.

The foregoing descriptions are merely embodiments of this application, but are not intended to limit this application. Any modification, equivalent replacement, improvement, and the like made without departing from the spirit and principle of this application shall fall within the protection scope of this application.

## Claims

1. A configuration management method, wherein the method comprises:
generating, by a server, one or more pieces of backup configuration data, wherein each piece of backup configuration data corresponds to metadata, the metadata comprises baseline indication information and a backup identifier, and the baseline indication information indicates whether the corresponding backup configuration data is baseline configuration data;
receiving, by the server, a network configuration protocol NETCONF configuration rollback request sent by a client; and
performing, by the server, configuration rollback based on metadata corresponding to the one or more pieces of backup configuration data and the NETCONF configuration rollback request.

2. The method according to claim 1, wherein the NETCONF configuration rollback request comprises rollback target indication information, and the rollback target indication information indicates to roll back to the baseline configuration data; and
the performing, by the server, configuration rollback based on metadata corresponding to the one or more pieces of backup configuration data and the NETCONF configuration rollback request comprises:
determining, by the server, the baseline configuration data from the one or more pieces of backup configuration data based on the rollback target indication information and baseline indication information in the metadata corresponding to the one or more pieces of backup configuration data; and
rolling back, by the server, configuration data in a running configuration datastore to the baseline configuration data.

3. The method according to claim 1, wherein the NETCONF configuration rollback request comprises rollback target indication information, the rollback target indication information indicates to roll back to first backup configuration data, and metadata corresponding to the first backup configuration data comprises a first backup identifier; and
the performing, by the server, configuration rollback based on metadata corresponding to the one or more pieces of backup configuration data and the NETCONF configuration rollback request comprises:
determining, by the server, the first backup configuration data corresponding to the first backup identifier from the one or more pieces of backup configuration data; and
rolling back, by the server, configuration data in a running configuration datastore to the first backup configuration data.

4. The method according to any one of claims 1 to 3, wherein the generating, by a server, one or more pieces of backup configuration data comprises:
generating, by the server each time the server receives a NETCONF backup creation request, one piece of backup configuration data based on the NETCONF backup creation request; and/or
generating, by the server, at least one piece of backup configuration data based on a preset time; and/or
generating, by the server each time configuration updating is performed, one piece of backup configuration data based on configuration data after the configuration updating.

5. The method according to claim 4, wherein in a case that the server receives a NETCONF backup creation request, if the NETCONF backup creation request comprises baseline configuration data indication information, baseline indication information in metadata corresponding to the generated one piece of backup configuration data is the baseline configuration data indication information, wherein the baseline configuration data indication information comprises a first value or a second value, the first value indicates that the corresponding backup configuration data is the baseline configuration data, and the second value indicates that the corresponding backup configuration data is not the baseline configuration data.

6. The method according to any one of claims 1 to 5, wherein the method further comprises:
receiving, by the server, a NETCONF data comparison request sent by the client, wherein the NETCONF data comparison request comprises first configuration data to be delivered;
comparing, by the server, the first configuration data with second configuration data to obtain a first comparison result, wherein the first comparison result comprises a differential part between the first configuration data and the second configuration data, and the second configuration data is data in the one or more pieces of backup configuration data; and
sending, by the server, the first comparison result to the client.

7. The method according to claim 6, wherein the NETCONF data comparison request further comprises comparison object indication information; and
before the comparing, by the server, the first configuration data with second configuration data, the method further comprises:
determining, by the server, the second configuration data from the one or more pieces of backup configuration data based on the comparison object indication information and the metadata corresponding to the one or more pieces of backup configuration data.

8. The method according to claim 7, wherein the comparison object indication information comprises indication information indicating that a comparison object is the baseline configuration data; and
the determining, by the server, the second configuration data from the one or more pieces of backup configuration data based on the comparison object indication information and the metadata corresponding to the one or more pieces of backup configuration data comprises:
determining, by the server, the second configuration data from the one or more pieces of backup configuration data based on the comparison object indication information and the baseline indication information in the metadata corresponding to the one or more pieces of backup configuration data, wherein the second configuration data is data in the baseline configuration data.

9. The method according to claim 7, wherein the comparison object indication information comprises a second backup identifier; and
the determining, by the server, the second configuration data from the one or more pieces of backup configuration data based on the comparison object indication information and the metadata corresponding to the one or more pieces of backup configuration data comprises:
determining, by the server, the second configuration data from the one or more pieces of backup configuration data based on the comparison object indication information and each backup identifier in the metadata corresponding to the one or more pieces of backup configuration data, wherein the second configuration data is data in backup configuration data corresponding to the second backup identifier.

10. The method according to claim 8 or 9, wherein the comparison object indication information further comprises a filter; and
the determining, by the server, the second configuration data from the one or more pieces of backup configuration data comprises:
determining, by the server, reference backup configuration data from the one or more pieces of backup configuration data; and
determining, by the server, the second configuration data from the reference backup configuration data based on the filter.

11. The method according to any one of claims 1 to 10, wherein the method further comprises:
receiving, by the server, a first NETCONF backup deletion request, wherein the first NETCONF backup deletion request comprises a third backup identifier; and
deleting, by the server, third backup configuration data corresponding to the third backup identifier from the one or more pieces of backup configuration data.

12. The method according to any one of claims 1 to 11, wherein the method further comprises:
receiving, by the server, a NETCONF metadata update request, wherein the NETCONF metadata update request comprises baseline configuration data update indication information; and
updating, by the server, baseline indication information in metadata corresponding to one piece of backup configuration data indicated by the baseline configuration data update indication information.

13. The method according to any one of claims 1 to 12, wherein the method further comprises:
receiving, by the server, a first NETCONF backup configuration data query request, wherein the first NETCONF backup configuration data query request comprises query target indication information, and the query target indication information indicates that a query target is the baseline configuration data;
querying, by the server, the one or more pieces of backup configuration data for the baseline configuration data based on the query target indication information and the baseline indication information in the metadata corresponding to the one or more pieces of backup configuration data, to obtain a first query result; and
sending, by the server, a first backup configuration data query response, wherein the first backup configuration data query response comprises the first query result.

14. The method according to any one of claims 1 to 13, wherein the one or more pieces of backup configuration data comprise a backup of the configuration data in the running configuration datastore.

15. A configuration management method, wherein the method comprises:
sending, by a client, a network configuration protocol NETCONF configuration rollback request to a server, to indicate the server to perform configuration rollback based on the NETCONF configuration rollback request and metadata corresponding to one or more pieces of backup configuration data, wherein the one or more pieces of backup configuration data are generated by the server, each piece of backup configuration data corresponds to metadata, the metadata comprises baseline indication information and a backup identifier, and the baseline indication information indicates whether the corresponding backup configuration data is baseline configuration data.

16. The method according to claim 15, wherein the method further comprises:
sending, by the client, a NETCONF backup creation request to the server, to indicate the server to generate one piece of backup configuration data based on the NETCONF backup creation request.

17. The method according to claim 15 or 16, wherein the method further comprises:
sending, by the client, a NETCONF data comparison request to the server, wherein the NETCONF data comparison request comprises first configuration data to be delivered, the NETCONF data comparison request indicates the server to compare the first configuration data with second configuration data, and the second configuration data is data in the one or more pieces of backup configuration data; and
receiving, by the client, a first comparison result sent by the server, wherein the first comparison result comprises a differential part between the first configuration data and the second configuration data.

18. The method according to claim 17, wherein the method further comprises:
generating, by the client, a NETCONF configuration update request based on the first comparison result and the first configuration data; and
sending, by the client, the NETCONF configuration update request to the server, to indicate the server to perform configuration updating based on the NETCONF configuration update request.

19. The method according to any one of claims 15 to 18, wherein the method further comprises:
obtaining, by the client, configuration data in a running configuration datastore; and
comparing, by the client, the configuration data in the running configuration datastore with the baseline configuration data to obtain a second comparison result.

20. The method according to any one of claims 15 to 19, wherein the method further comprises:
sending, by the client, a first NETCONF backup deletion request to the server, wherein the first NETCONF backup deletion request comprises a third backup identifier, and the first NETCONF backup deletion request indicates the server to delete third backup configuration data corresponding to the third backup identifier from the one or more pieces of backup configuration data.

21. The method according to any one of claims 15 to 20, wherein the method further comprises:
sending, by the client, a NETCONF metadata update request to the server, wherein the NETCONF metadata update request comprises baseline configuration data update indication information, and the NETCONF metadata update request indicates the server to update baseline indication information in metadata corresponding to one piece of backup configuration data indicated by the baseline configuration data update indication information.

22. The method according to any one of claims 15 to 21, wherein the method further comprises:
sending, by the client, a first NETCONF backup configuration data query request to the server, wherein the first NETCONF backup configuration data query request comprises query target indication information, and the query target indication information indicates that a query target is the baseline configuration data; and
receiving, by the client, a first backup configuration data query response sent by the server, wherein the first backup configuration data query response comprises a first query result, and the first query result is obtained after the server queries the one or more pieces of backup configuration data for the baseline configuration data based on the query target indication information and baseline indication information in the metadata corresponding to the one or more pieces of configuration data.

23. A configuration management apparatus, applied to a server, wherein the apparatus comprises:
a generation module, configured to generate one or more pieces of backup configuration data, wherein each piece of backup configuration data corresponds to metadata, the metadata comprises baseline indication information and a backup identifier, and the baseline indication information indicates whether the corresponding backup configuration data is baseline configuration data;
a first receiving module, configured to receive a network configuration protocol NETCONF configuration rollback request sent by a client; and
a configuration rollback module, configured to perform configuration rollback based on metadata corresponding to the one or more pieces of backup configuration data and the NETCONF configuration rollback request.

24. The apparatus according to claim 23, wherein the NETCONF configuration rollback request comprises rollback target indication information, and the rollback target indication information indicates to roll back to the baseline configuration data; and
the configuration rollback module comprises:
a first determining submodule, configured to determine the baseline configuration data from the one or more pieces of backup configuration data based on the rollback target indication information and baseline indication information in the metadata corresponding to the one or more pieces of backup configuration data; and
a first rollback submodule, configured to roll back configuration data in a running configuration datastore to the baseline configuration data.

25. The apparatus according to claim 23, wherein the NETCONF configuration rollback request comprises rollback target indication information, the rollback target indication information indicates to roll back to first backup configuration data, and metadata corresponding to the first backup configuration data comprises a first backup identifier; and
the configuration rollback module comprises:
a second determining submodule, configured to determine the first backup configuration data corresponding to the first backup identifier from the one or more pieces of backup configuration data; and
a second rollback submodule, configured to roll back configuration data in a running configuration datastore to the first backup configuration data.

26. The apparatus according to any one of claims 23 to 25, wherein the generating module comprises:
a first generation submodule, configured to generate, each time a NETCONF backup creation request is received, one piece of backup configuration data based on the NETCONF backup creation request; and/or
a second generation submodule, configured to generate at least one piece of backup configuration data based on a preset time; and/or
a third generation submodule, configured to generate, each time configuration updating is performed, one piece of backup configuration data based on configuration data after the configuration updating.

27. The apparatus according to claim 26, wherein in a case that the first generation submodule receives a NETCONF backup creation request, if the NETCONF backup creation request comprises baseline configuration data indication information, baseline indication information in metadata corresponding to the generated one piece of backup configuration data is the baseline configuration data indication information, wherein the baseline configuration data indication information comprises a first value or a second value, the first value indicates that the corresponding backup configuration data is the baseline configuration data, and the second value indicates that the corresponding backup configuration data is not the baseline configuration data.

28. The apparatus according to any one of claims 23 to 27, wherein the apparatus further comprises:
a second receiving module, configured to receive a NETCONF data comparison request sent by the client, wherein the NETCONF data comparison request comprises first configuration data to be delivered;
a comparison module, configured to compare the first configuration data with second configuration data to obtain a first comparison result, wherein the first comparison result comprises a differential part between the first configuration data and the second configuration data, and the second configuration data is data in the one or more pieces of backup configuration data; and
a first sending module, configured to send the first comparison result to the client.

29. The apparatus according to claim 28, wherein the NETCONF data comparison request further comprises comparison object indication information; and
the apparatus further comprises:
a determining module, configured to determine the second configuration data from the one or more pieces of backup configuration data based on the comparison object indication information and the metadata corresponding to the one or more pieces of backup configuration data.

30. The apparatus according to claim 29, wherein the comparison object indication information comprises indication information indicating that a comparison object is the baseline configuration data; and
the determining module comprises:
a third determining submodule, configured to determine the second configuration data from the one or more pieces of backup configuration data based on the comparison object indication information and the baseline indication information in the metadata corresponding to the one or more pieces of backup configuration data, wherein the second configuration data is data in the baseline configuration data.

31. The apparatus according to claim 29, wherein the comparison object indication information comprises a second backup identifier; and
the determining module comprises:
a third determining submodule, configured to determine the second configuration data from the one or more pieces of backup configuration data based on the comparison object indication information and each backup identifier in the metadata corresponding to the one or more pieces of backup configuration data, wherein the second configuration data is data in backup configuration data corresponding to the second backup identifier.

32. The apparatus according to claim 30 or 31, wherein the comparison object indication information further comprises a filter; and
the third determining submodule is configured to:
determine reference backup configuration data from the one or more pieces of backup configuration data; and
determine the second configuration data from the reference backup configuration data based on the filter.

33. The apparatus according to any one of claims 23 to 32, wherein the apparatus further comprises:
a third receiving module, configured to receive a first NETCONF backup deletion request, wherein the first NETCONF backup deletion request comprises a third backup identifier; and
a backup deletion module, configured to delete third backup configuration data corresponding to the third backup identifier from the one or more pieces of backup configuration data.

34. The apparatus according to any one of claims 23 to 33, wherein the apparatus further comprises:
a fourth receiving module, configured to receive a NETCONF metadata update request, wherein the NETCONF metadata update request comprises baseline configuration data update indication information; and
a metadata updating module, configured to update baseline indication information in metadata corresponding to one piece of backup configuration data indicated by the baseline configuration data update indication information.

35. The apparatus according to any one of claims 23 to 34, wherein the apparatus further comprises:
a fifth receiving module, configured to receive a first NETCONF backup configuration data query request, wherein the first NETCONF backup configuration data query request comprises query target indication information, and the query target indication information indicates that a query target is the baseline configuration data;
a query module, configured to query the one or more pieces of backup configuration data for the baseline configuration data based on the query target indication information and the baseline indication information in the metadata corresponding to the one or more pieces of backup configuration data, to obtain a first query result; and
a second sending module, configured to send a first backup configuration data query response, wherein the first backup configuration data query response comprises the first query result.

36. The apparatus according to any one of claims 23 to 35, wherein the one or more pieces of backup configuration data comprise a backup of the configuration data in the running configuration datastore.

37. A configuration management apparatus, applied to a client, wherein the apparatus comprises:
a first sending module, configured to send a network configuration protocol NETCONF configuration rollback request to a server, to indicate the server to perform configuration rollback based on the NETCONF configuration rollback request and metadata corresponding to one or more pieces of backup configuration data, wherein the one or more pieces of backup configuration data are generated by the server, each piece of backup configuration data corresponds to metadata, the metadata comprises baseline indication information and a backup identifier, and the baseline indication information indicates whether the corresponding backup configuration data is baseline configuration data.

38. The apparatus according to claim 37, wherein the apparatus further comprises:
a second sending module, configured to send a NETCONF backup creation request to the server, to indicate the server to generate one piece of backup configuration data based on the NETCONF backup creation request.

39. The apparatus according to claim 37 or 38, wherein the apparatus further comprises:
a third sending module, configured to send a NETCONF data comparison request to the server, wherein the NETCONF data comparison request comprises first configuration data to be delivered, the NETCONF data comparison request indicates the server to compare the first configuration data with second configuration data, and the second configuration data is data in the one or more pieces of backup configuration data; and
a first receiving module, configured to receive a first comparison result sent by the server, wherein the first comparison result comprises a differential part between the first configuration data and the second configuration data.

40. The apparatus according to claim 39, wherein the apparatus further comprises:
a generation module, configured to generate a NETCONF configuration update request based on the first comparison result and the first configuration data; and
a fourth sending module, configured to send the NETCONF configuration update request to the server, to indicate the server to perform configuration updating based on the NETCONF configuration update request.

41. The apparatus according to any one of claims 37 to 40, wherein the apparatus further comprises:
an obtaining module, configured to obtain configuration data in a running configuration datastore; and
a comparison module, configured to compare the configuration data in the running configuration datastore with the baseline configuration data to obtain a second comparison result.

42. The apparatus according to any one of claims 37 to 41, wherein the apparatus further comprises:
a fifth sending module, configured to send a first NETCONF backup deletion request to the server, wherein the first NETCONF backup deletion request comprises a third backup identifier, and the first NETCONF backup deletion request indicates the server to delete third backup configuration data corresponding to the third backup identifier from the one or more pieces of backup configuration data.

43. The apparatus according to any one of claims 37 to 42, wherein the apparatus further comprises:
a sixth sending module, configured to send a NETCONF metadata update request to the server, wherein the NETCONF metadata update request comprises baseline configuration data update indication information, and the NETCONF metadata update request indicates the server to update baseline indication information in metadata corresponding to one piece of backup configuration data indicated by the baseline configuration data update indication information.

44. The apparatus according to any one of claims 37 to 43, wherein the apparatus further comprises:
a seventh sending module, configured to send a first NETCONF backup configuration data query request to the server, wherein the first NETCONF backup configuration data query request comprises query target indication information, and the query target indication information indicates that a query target is the baseline configuration data; and
a second receiving module, configured to receive a first backup configuration data query response sent by the server, wherein the first backup configuration data query response comprises a first query result, and the first query result is obtained after the server queries the one or more pieces of backup configuration data for the baseline configuration data based on the query target indication information and baseline indication information in the metadata corresponding to the one or more pieces of configuration data.

45. A communication device, comprising a processor and a memory, wherein
the memory is configured to store a computer program; and
the processor is configured to execute the computer program to implement the steps of the method according to any one of claims 1 to 14.

46. A communication device, comprising a processor and a memory, wherein
the memory is configured to store a computer program; and
the processor is configured to execute the computer program to implement the steps of the method according to any one of claims 15 to 22.

47. A configuration management system, comprising a server and a client, wherein
the server is configured to implement the steps of the method according to any one of claims 1 to 14; and
the client is configured to implement the steps of the method according to any one of claims 15 to 22.

48. A computer-readable storage medium, wherein the storage medium stores a computer program, and when the computer program is executed by a processor, the steps of the method according to any one of claims 1 to 14 are implemented, or the steps of the method according to any one of claims 15 to 22 are implemented.

49. A computer program product, wherein the computer program product stores computer instructions, and when the computer instructions are executed by a processor, the steps of the method according to any one of claims 1 to 14 are implemented, or the steps of the method according to any one of claims 15 to 22 are implemented.
